# EUROPEAN PATENT APPLICATION

(11) **EP 4 539 482 A1**
(43) Date of publication of application: **16.04.2025**
(21) Application number: 23893319.6
(22) Date of filing: 26.08.2023
(51) Int. Cl.: H04N 23/00

(54) **PHOTOGRAPHIC MODE SWITCHING METHOD AND RELATED APPARATUS**

(30) Priority: 22.11.2022 CN 202211468023
(71) Applicant: Honor Device Co., Ltd., Shenzhen, Guangdong 518040 (CN)
(72) Inventor: WANG, Jianxian, Shenzhen, Guangdong 518040 (CN)
(74) Representative: Goddar, Heinz J.
(86) International application number: PCT/CN2023/115114
(87) International publication number: WO 2024/109225

(57) **Abstract**

This application provides a photographing mode switching method and a related apparatus. When an electronic device switches from a first photographing mode to a second photographing mode, the electronic device may determine whether a zoom ratio range supported by the second photographing mode includes a first zoom ratio. If the zoom ratio range supported by the second photographing mode includes the first zoom ratio, the electronic device may set an initial zoom ratio in the second photographing mode to the first zoom ratio. In this way, a field of view of a preview picture may be prevented from jumping excessively in a photographing mode switching process, thereby improving a display effect of the preview picture in the photographing mode switching process.

## Description

This application claims priority to Chinese Patent Application No. 202211468023.6, filed with the China National Intellectual Property Administration on November 22, 2022 and entitled "PHOTOGRAPHING MODE SWITCHING METHOD AND RELATED APPARATUS", which is incorporated herein by reference in its entirety.

### TECHNICAL FIELD

This application relates to the field of computer vision technologies, and in particular, to a photographing mode switching method and a related apparatus.

### BACKGROUND

With the development of smartphones, photographing and video recording have become one of most important features. With increasingly powerful photographing and video recording functions of an electronic device such as a smartphone, more people use an electronic device such as a smartphone to take a photo instead of a professional camera, and there is an increasing quantity of photographing modes on an electronic device such as a smartphone.

When using a photographing preview of an electronic device such as a smartphone, a user may switch between different photographing modes to preview photographing effects in different photographing modes. In a process in which the electronic device switches from one photographing mode to another photographing mode, how to improve visual perception of a preview picture becomes an urgent problem to be resolved by persons skilled in the art.

### SUMMARY

This application provides a photographing mode switching method and a related apparatus, so that during switching from a first photographing mode to a second photographing mode, if a zoom ratio range supported by the second photographing mode includes a first zoom ratio, an initial zoom ratio in the second photographing mode is set to the first zoom ratio. In this way, a field of view of a preview picture may be prevented from jumping excessively in a photographing mode switching process, thereby improving a display effect of the preview picture in the photographing mode switching process.

According to a first aspect, this application provides a photographing mode switching method, applied to an electronic device having a camera. The method includes: displaying a first preview interface, where the first preview interface displays a first preview picture, and a zoom ratio corresponding to the first preview picture is a first zoom ratio; receiving a first operation of switching from the first photographing mode to a second photographing mode, where the first photographing mode is different from the second photographing mode; and when the first zoom ratio is within a zoom ratio range supported by the second photographing mode, displaying a second preview interface in response to the first operation, where the second preview interface displays a second preview picture, and a zoom ratio corresponding to the second preview picture is the first zoom ratio.

In this way, when the electronic device switches from the first photographing mode to the second photographing mode, the electronic device may determine whether the zoom ratio range supported by the second photographing mode includes the first zoom ratio. If the zoom ratio range supported by the second photographing mode includes the first zoom ratio, the electronic device may set an initial zoom ratio in the second photographing mode to the first zoom ratio. In this way, a field of view of a preview picture may be prevented from jumping excessively in a photographing mode switching process, thereby improving a display effect of the preview picture in the photographing mode switching process.

With reference to the first aspect, in some possible implementations, the first preview interface further displays a first zoom ratio control, and a zoom ratio selected on the first zoom ratio control is the first zoom ratio; and the second preview interface further displays a second zoom ratio control, and a zoom ratio selected on the second zoom ratio control is the first zoom ratio.

With reference to the first aspect, in some possible implementations, that the first zoom ratio is within a zoom ratio range supported by the second photographing mode includes: The first zoom ratio is greater than or equal to a first value, and the first zoom ratio is less than or equal to a second value, where the first value is less than the second value.

With reference to the first aspect, in some possible implementations, the zoom ratio range supported by the second photographing mode is between the first value and the second value, and the method further includes: when the first zoom ratio is not within the zoom ratio range supported by the second photographing mode, displaying a third preview interface in response to the first operation, where the third preview interface displays a third preview picture, and a zoom ratio corresponding to the third preview picture is the first value or the second value.

In this manner, in a photographing mode switching process, when a zoom ratio last used in a previous photographing mode is not within a zoom ratio range supported by a subsequent photographing mode, a jump amplitude of a field of view of a preview picture can be reduced as much as possible, thereby improving a display effect of the preview picture in the photographing mode switching process.

With reference to the first aspect, in some possible implementations, when the first zoom ratio is greater than the second value, the zoom ratio corresponding to the third preview picture is the second value; and when the first zoom ratio is less than the first value, the zoom ratio corresponding to the third preview picture is the first value.

With reference to the first aspect, in some possible implementations, the method further includes: displaying a fourth preview interface in response to the first operation, where the fourth preview interface displays a fourth preview picture, and a zoom ratio corresponding to the fourth preview picture is a default zoom ratio.

In this manner, in a photographing mode switching process, when a zoom ratio last used in a previous photographing mode is not within a zoom ratio range supported by a subsequent photographing mode, the zoom ratio is restored to the default zoom ratio.

With reference to the first aspect, in some possible implementations, before the receiving a first operation of switching from the first photographing mode to a second photographing mode, the method further includes: recognizing a photographing scene and determining the second photographing mode based on the photographing scene; and displaying, in the first preview interface, a first control corresponding to the second photographing mode, where the first operation is an operation corresponding to the first control.

In this manner, a photographing mode related to a user may be automatically recommended based on a photographing scene, thereby improving photographing experience of the user.

With reference to the first aspect, in some possible implementations, the first preview interface further includes an AI scene recognition control; and before the recognizing a photographing scene and determining the second photographing mode based on the photographing scene, the method further includes: receiving a second operation performed on the AI scene recognition control; and the recognizing a photographing scene and determining the second photographing mode specifically includes: recognizing the photographing scene in response to the second operation, and determining the second photographing mode based on the photographing scene.

In this manner, an AI scene recognition function is manually enabled by a user, to automatically recommend, based on a photographing scene, a photographing mode related to the user, thereby improving photographing experience of the user.

With reference to the first aspect, in some possible implementations, the receiving a first operation of switching from the first photographing mode to a second photographing mode specifically includes: detecting, by using a mode management module in a camera application on the electronic device, the first operation of switching from the first photographing mode to the second photographing mode. The method further includes: The mode management module sends, in response to the first operation, an instruction for switching to the second photographing mode to a zoom ratio management module in the camera application, and sending a preview request for the first photographing mode to a camera hardware abstraction layer; after receiving the instruction for switching to the second photographing mode, the zoom ratio management module determines whether the first zoom ratio is within the zoom ratio range supported by the second photographing mode; when the first zoom ratio is within the zoom ratio range supported by the second photographing mode, the zoom ratio management module sends the first zoom ratio to the camera hardware abstraction layer on the electronic device; and after receiving the instruction for switching to the second photographing mode and the first zoom ratio, the camera hardware abstraction layer obtains preview data captured by the camera of the electronic device in the second photographing mode at the first zoom ratio.

In this manner, when switching from the first photographing mode to the second photographing mode by using functional modules, the electronic device may determine whether the zoom ratio range supported by the second photographing mode includes the first zoom ratio. If the zoom ratio range supported by the second photographing mode includes the first zoom ratio, the electronic device may set an initial zoom ratio in the second photographing mode to the first zoom ratio. In this way, a field of view of a preview picture may be prevented from jumping excessively in a photographing mode switching process, thereby improving a display effect of the preview picture in the photographing mode switching process.

With reference to the first aspect, in some possible implementations, the method includes: The camera hardware abstraction layer sends, to a display control module at an application framework layer on the electronic device, the preview data captured by the camera of the electronic device in the second photographing mode; and the display control module displays the second preview picture in the second preview interface based on the preview data captured by the camera of the electronic device in the second photographing mode at the first zoom ratio.

With reference to the first aspect, in some possible implementations, the zoom ratio range supported by the second photographing mode is between the first value and the second value, and the method further includes: When the first zoom ratio is not within the zoom ratio range supported by the second photographing mode, the zoom ratio management module sends the first value or the second value to the camera hardware abstraction layer on the electronic device; after receiving the instruction for switching to the second photographing mode and the first value or the second value, the camera hardware abstraction layer obtains preview data captured by the camera of the electronic device in the second photographing mode at a zoom ratio with the first value or the second value; the camera hardware abstraction layer sends, to the display control module, the preview data captured by the camera of the electronic device in the second photographing mode at the zoom ratio with the first value or the second value; and the display control module displays the third preview picture in the third preview interface based on the preview data captured by the camera of the electronic device in the second photographing mode at the zoom ratio with the first value or the second value.

With reference to the first aspect, in some possible implementations, the camera hardware abstraction layer stores zoom ratio ranges of a plurality of photographing modes, and the plurality of photographing modes include the first photographing mode and the second photographing mode. Before the detecting, by using a mode management module in a camera application, the first operation of switching from the first photographing mode to the second photographing mode, the method further includes: A camera starting module in the camera application detects an operation of starting the camera application; the camera starting module sends a camera starting instruction to the zoom ratio management module in response to the operation of starting the camera application; the zoom ratio module sends a zoom ratio range obtaining request to the camera hardware abstraction layer; and the camera hardware abstraction layer returns the zoom ratio ranges respectively supported by the plurality of photographing modes to the zoom ratio management module.

With reference to the first aspect, in some possible implementations, when displaying the first preview interface, the method further includes: if the first zoom ratio is less than or equal to a maximum optical zoom ratio that is of the electronic device and that supports optical zooming, controlling the camera to perform optical zooming to capture an image stream with the first zoom ratio; and processing, by using an image processing procedure corresponding to the first photographing mode, the image stream with the first zoom ratio to obtain the first preview picture.

With reference to the first aspect, in some possible implementations, when displaying the first preview interface, the method further includes: if the first zoom ratio is greater than the maximum optical zoom ratio that is of the electronic device and that supports optical zooming, controlling the camera to perform optical zooming to capture an image stream with the maximum optical zoom ratio; performing digital zooming on the image stream with the maximum optical zoom ratio to obtain an image stream with the first zoom ratio; and processing, by using the image processing procedure corresponding to the first photographing mode, the image stream with the first zoom ratio to obtain the first preview picture.

With reference to the first aspect, in some possible implementations, when displaying the second preview interface, the method further includes: if the first zoom ratio is less than or equal to the maximum optical zoom ratio that is of the electronic device and that supports optical zooming, controlling the camera to perform optical zooming to capture an image stream with the first zoom ratio; and processing, by using an image processing procedure corresponding to the second photographing mode, the image stream with the first zoom ratio to obtain the second preview picture.

With reference to the first aspect, in some possible implementations, when displaying the second preview interface, the method further includes: if the first zoom ratio is greater than the maximum optical zoom ratio that is of the electronic device and that supports optical zooming, controlling the camera to perform optical zooming to capture an image stream with the maximum optical zoom ratio; performing digital zooming on the image stream with the maximum optical zoom ratio to obtain an image stream with the first zoom ratio; and processing, by using the image processing procedure corresponding to the second photographing mode, the image stream with the first zoom ratio to obtain the second preview picture.

With reference to the first aspect, in some possible implementations, the first photographing mode is any one of the following: a normal video recording mode, a MACRO video recording mode, a NIGHT video recording mode, a PORTRAIT video recording mode, a high-dynamic video recording mode, a SOLO CUT video recording mode, and a multi-lens video recording mode; and the second photographing mode is any one of the following: a normal video recording mode, a MACRO video recording mode, a NIGHT video recording mode, a PORTRAIT video recording mode, a high-dynamic video recording mode, a SOLO CUT video recording mode, and a multi-lens video recording mode.

According to a second aspect, this application provides an electronic device, including a camera, one or more processors, and one or more memories. The camera and the one or more memories are coupled to the one or more processors, the one or more memories are configured to store computer program code, and the computer program code includes computer instructions. When the one or more processors execute the computer instructions, the photographing mode switching method in any possible implementation of the first aspect is enabled to be performed.

According to a third aspect, this application provides another electronic device, including one or more functional modules. The one or more functional modules are configured to perform the photographing mode switching method in any possible implementation of the first aspect.

According to a fourth aspect, this application provides a chip system. The chip system is applied to an electronic device, and the chip system includes one or more processors. The processor is configured to invoke computer instructions to enable the photographing mode switching method in any possible implementation of the first aspect to be performed.

According to a fifth aspect, this application provides a computer-readable storage medium, including instructions. When the instructions are run on an electronic device, the photographing mode switching method in any possible implementation of the first aspect is enabled to be performed.

According to a sixth aspect, this application provides a communication apparatus, including one or more processors and one or more memories. The one or more memories are coupled to the one or more processors. The one or more memories are configured to store computer program code. The computer program code includes computer instructions. When the one or more processors execute the computer instructions, the communication apparatus is enabled to perform the photographing mode switching method in any possible implementation of any one of the foregoing aspects.

According to a seventh aspect, an embodiment of this application provides a computer storage medium, including computer instructions. When the computer instructions are run on an electronic device, the communication apparatus is enabled to perform the photographing mode switching method in any possible implementation of any one of the foregoing aspects.

According to an eighth aspect, an embodiment of this application provides a computer program product. When the computer program product runs on a computer, the computer is enabled to perform the photographing mode switching method in any possible implementation of any one of the foregoing aspects.

### BRIEF DESCRIPTION OF DRAWINGS

FIG. 1 is a schematic diagram of a hardware structure of an electronic device according to an embodiment of this application;
FIG. 2 is a schematic diagram of a software and hardware architecture of an electronic device according to an embodiment of this application;
FIG. 3A-FIG. 3L are schematic diagrams of a group of interfaces according to an embodiment of this application;
FIG. 4A-FIG. 4D are schematic diagrams of another group of interfaces according to an embodiment of this application;
FIG. 5A to FIG. 5C are a schematic diagram of interaction between software modules in a photographing mode switching method according to an embodiment of this application; and
FIG. 6 is a schematic flowchart of a photographing mode switching method according to an embodiment of this application.

### DESCRIPTION OF EMBODIMENTS

The following clearly and completely describes the technical solutions in embodiments of this application with reference to the accompanying drawings. In descriptions of the embodiments of this application, unless otherwise stated, "/" indicates a meaning of "or", for example, A/B may indicate A or B. "And/or" in the specification is merely used to describe an association relationship between associated objects, and indicates that three relationships may exist. For example, "A and/or B" may indicate that there are three cases: Only A exists, both A and B exist, and only B exists. In addition, in the descriptions of the embodiments of this application, "a plurality of" means two or more.

The following terms "first" and "second" are merely intended for descriptive purposes, and shall not be understood as an implication or implication of relative importance or an implicit indication of a quantity of indicated technical features. Therefore, features defined with "first" and "second" may explicitly or implicitly include one or more features. In the descriptions of the embodiments of this application, unless otherwise stated, "a plurality of" means two or more.

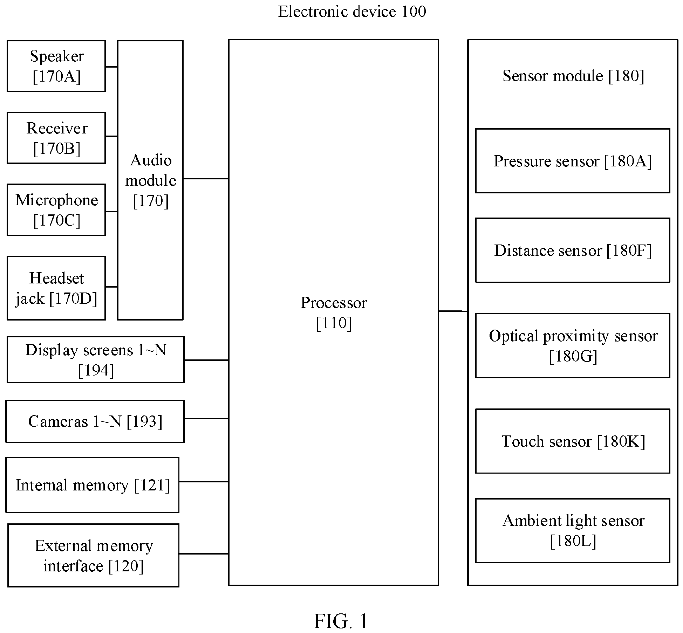

FIG. 1 is a schematic diagram of a hardware structure of an electronic device 100 according to an embodiment of this application.

The electronic device 100 may include a processor 110, an external memory interface 120, an internal memory 121, an audio module 170, a speaker 170A, a receiver 170B, a microphone 170C, a headset jack 170D, a sensor module 180, a camera 193, a display screen 194, and the like. The sensor module 180 may include a pressure sensor 180A, a distance sensor 180F, an optical proximity sensor 180G, a touch sensor 180K, an ambient light sensor 180L, and the like.

It may be understood that the structure shown in this embodiment of the present invention does not constitute a specific limitation on the electronic device 100. In some other embodiments of this application, the electronic device 100 may include more or fewer components than those shown in the figure, combine some components, split some components, or have different component arrangements. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent devices, or may be integrated into one or more processors. The controller may generate an operation control signal based on instruction operation code and a timing signal, to complete control of instruction fetching and instruction execution.

A memory may be further disposed in the processor 110 to store instructions and data. In some embodiments, the memory in the processor 110 is a cache. The memory may store instructions or data recently used or cyclically used by the processor 110. If the processor 110 needs to use the instructions or the data again, the processor may directly invoke the instructions or the data from the memory. This avoids repeated access and reduces waiting time of the processor 110, thereby improving system efficiency.

The electronic device 100 implements a display function by using the GPU, the display screen 194, the application processor, and the like. The GPU is a microprocessor for image processing and is connected to the display screen 194 and the application processor. The GPU is configured to perform mathematical and geometric calculation for graphics rendering. The processor 110 may include one or more GPUs that execute program instructions to generate or change displayed information.

The display screen 194 is configured to display an image, a video, and the like. The display screen 194 includes a display panel. The display screen 194 includes a display panel. The display panel may be a liquid crystal display (liquid crystal display, LCD). The display panel may alternatively be made from an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a miniled, a microled, a micro-oled, a quantum dot light emitting diode (quantum dot light emitting diodes, QLED), or the like. In some embodiments, the electronic device may include one or N display screens 194, where N is a positive integer greater than 1.

The electronic device 100 may implement a photographing function by using the ISP, the camera 193, the video codec, the GPU, the display screen 194, the application processor, and the like.

The ISP is configured to process data fed back by the camera 193. For example, during photographing, a shutter is opened, and light is transferred to a photosensitive element of the camera through a lens. An optical signal is converted into an electrical signal. The photosensitive element of the camera transfers the electrical signal to the ISP for processing, to convert the electrical signal into an image visible to naked eyes. The ISP may further perform algorithm optimization on noise and illumination of the image. The ISP may further optimize parameters such as exposure and color temperature of a photographing scene. In some embodiments, the ISP may be disposed in the camera 193.

The camera 193 is configured to capture a still image or a video. An optical image of an object is generated through the lens and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 100 may include one or N cameras 193, where N is a positive integer greater than 1.

The digital signal processor is configured to process a digital signal, and may further process another digital signal in addition to the digital image signal. For example, when the electronic device 100 selects a frequency, the digital signal processor is configured to perform Fourier transform and the like on frequency energy. The video codec is configured to compress or decompress a digital video. The electronic device 100 may support one or more video codecs. In this way, the electronic device 100 may play or record videos in a plurality of encoding formats, for example, moving picture experts group (moving picture experts group, MPEG) 1, MPEG2, MPEG3, and MPEG4.

The internal memory 121 may include one or more random access memories (random access memory, RAM) and one or more non-volatile memories (non-volatile memory, NVM). The processor 110 may directly perform reading from or writing into the random access memory. The random access memory may be configured to store an executable program (for example, a machine instruction) of an operating system or another running program, and may be further configured to store data of a user and data of an application, and the like. The non-volatile memory may also store the executable program, the data of the user, and the data of the application, and the like, which may be loaded into the random access memory in advance for directly reading and writing by the processor 110.

Program code corresponding to the photographing mode recommendation method provided in the embodiments of this application may be stored in a non-volatile memory. In a scenario in which a camera application is running, the electronic device 100 may load the program code stored in the non-volatile memory into a random access memory, and then send the program code to the processor 110 for execution, to implement the photographing mode switching method.

The external memory interface 120 may be configured to connect to an external non-volatile memory, to extend a storage capability of the electronic device 100. The external non-volatile memory communicates with the processor 110 by using the external memory interface 120, to implement a data storage function. For example, files such as a video obtained through photographing are stored in the external non-volatile memory.

The electronic device 100 may implement an audio function by using the audio module 170, the application processor, and the like.

The audio module 170 is configured to convert digital audio information into an analog audio signal for output, and is further configured to convert an analog audio input into a digital audio signal. The audio module 170 may be further configured to encode and decode an audio signal. In some embodiments, the audio module 170 may be disposed in the processor 110 or some functional modules of the audio module 170 may be disposed in the processor 110.

Specifically, the audio module 170 may include the speaker 170A, the receiver 170B, the microphone 170C, and the headset jack 170D. The speaker 170A, also referred to as a "loudspeaker", is configured to convert an audio electrical signal into a sound signal. The receiver 170B, also referred to as an "earpiece", is configured to convert an audio electrical signal into a sound signal. In this embodiment of this application, after starting to record a video, the electronic device 100 may encode an audio electrical signal of the microphone 170C, and then obtain an audio track of the video. The microphone 170C, also referred to as a "mic" or "mike", is configured to convert a sound signal into an electrical signal. The headset jack 170D is configured to connect to a wired headset.

The pressure sensor 180A is configured to sense a pressure signal, and may convert the pressure signal into an electrical signal. In some embodiments, the pressure sensor 180A may be disposed on the display screen 194. When a touch operation is performed on the display screen 194, the electronic device 100 detects intensity of the touch operation based on the pressure sensor 180A. The electronic device 100 may also calculate a touch location based on a detected signal of the pressure sensor 180A.

The distance sensor 180F is configured to measure a distance. The electronic device 100 may measure a distance in an infrared manner or a laser manner. In some embodiments, in a photographing scene, the electronic device 100 may measure a distance by using the distance sensor 180F, to implement fast focusing. In this embodiment of this application, the electronic device 100 may determine an object distance of an image by using the distance sensor 180F.

The ambient light sensor 180L is configured to sense illumination of ambient light. In this embodiment of this application, the electronic device 100 may determine illumination of an image by using the ambient light sensor 180L.

The touch sensor 180K is also referred to as a "touch control device". The touch sensor 180K may be disposed on the display screen 194. The touch sensor 180K and the display screen 194 form a touchscreen, also referred to as a "touch control screen". The touch sensor 180K is configured to detect a touch operation performed on or near the touch sensor. The touch sensor may transfer the detected touch operation to the application processor to determine a type of a touch event. A visual output related to the touch operation may be provided by using the display screen 194. In some other embodiments, the touch sensor 180K may alternatively be disposed on a surface of the electronic device 100, at a location different from that of the display screen 194.

In this embodiment of this application, the electronic device 100 may detect, by using a touch detection capability provided by the touch sensor 180K, user operations such as tapping and sliding performed by a user on the screen, to control enabling and disabling of an application and a control.

The electronic device 100 may be a mobile phone having a camera, a digital camera, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart household device, and/or a smart city device. A specific type of the electronic device 100 is not specially limited in this embodiment of this application.

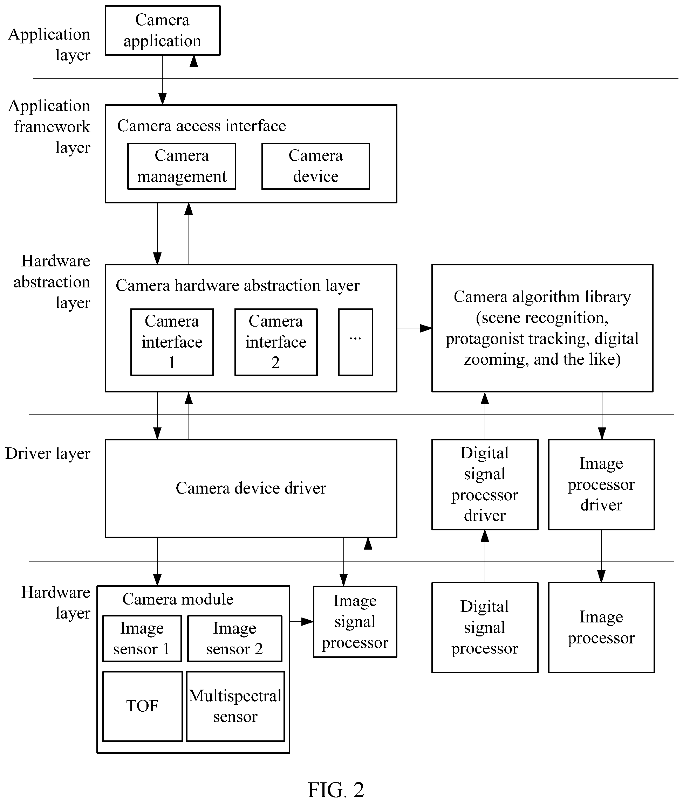

FIG. 2 is an example of a schematic diagram of a software and hardware architecture of an electronic device according to an embodiment of this application.

As shown in FIG. 2, a layered architecture divides a system into several layers, and each layer has a clear role and task. The layers communicate with each other by using software interfaces. In some embodiments, the system is divided into five layers from top to bottom: an application layer, an application framework layer, a hardware abstraction layer, a driver layer, and a hardware layer.

The application layer may include a series of application packages.

The application package may include a camera application and the like.

The application framework layer provides an application programming interface (application programming interface, API) and a programming framework for the application package at the application layer. The application framework layer includes some predefined functions.

In some embodiments, the application framework layer may include a camera access interface. The camera access interface may include camera management and a camera device. The camera access interface is configured to provide an application programming interface and a programming framework for the camera application.

The hardware abstraction layer is an interface layer located between the application framework layer and the driver layer, and provides a virtual hardware platform for an operating system.

In this embodiment of this application, the hardware abstraction layer may include a camera hardware abstraction layer and a camera algorithm library.

The camera hardware abstraction layer may provide one or more interfaces for invoking a camera. The one or more interfaces for invoking a camera include a camera interface 1 (for example, a main camera), a camera interface 2 (for example, a wide-angle camera), and the like. The electronic device 100 may invoke each camera by using a camera interface such as the camera interface 1 or the camera interface 2.

The camera algorithm library may include one or more algorithm modules of an image processing/image recognition algorithm, for example, an algorithm module for scene recognition, an algorithm module for protagonist tracking, and an algorithm module for digital zooming.

The driver layer is a layer between hardware and software. The driver layer includes various hardware drivers. The driver layer may include a camera device driver, a digital signal processor driver, an image processor driver, and the like. The camera device driver is configured to drive an image sensor (for example, an image sensor 1 and an image sensor 2) of one or more cameras in a camera module to capture an image, and drive an image signal processor to preprocess the image. The digital signal processor driver is configured to drive a digital signal processor to process the image. The image processor driver is configured to drive a graphics processing unit to process the image.

The hardware layer may include a camera module, an image signal processor, a digital signal processor, and an image processor. The camera module may include an image sensor (for example, an image sensor 1 and an image sensor 2) of one or more cameras. Optionally, the camera module may further include a time of flight (time of flight, TOF) sensor, a multispectral sensor, and the like.

The method in the embodiments of this application is described in detail below with reference to the foregoing hardware structure and system structure.

1. The electronic device 100 enables the camera to obtain an image reported by the camera.

In response to an operation (for example, a tap operation) performed by a user on an icon of the camera application, the camera application invokes the camera access interface at the application framework layer to start the camera application, and further sends, by invoking the camera interface 1 (which is usually a main camera by default) at the camera hardware abstraction layer, an instruction for starting the camera application. The camera hardware abstraction layer sends the instruction to the camera device driver at the driver layer. The camera device driver may start an image sensor (for example, the image sensor 1) corresponding to the camera interface 1, collect an image light signal by using the image sensor 1 and transmit the image light signal to the image signal processor for preprocessing to obtain an image, and then transmit the image to the camera hardware abstraction layer by using the camera device driver. Continuously generated images constitute an image stream.

2. The electronic device 100 determines, based on the image, a photographing scene in which the electronic device is currently located, and determines a photographing mode that matches the photographing scene.

In one aspect, the camera hardware abstraction layer may directly send the image back to the camera application for display.

In another aspect, the camera hardware abstraction layer may send the image to the camera algorithm library. Based on support of the digital signal processor and the image processor, the camera algorithm library may extract feature information of the image. The camera algorithm library may determine an object distance of the image by using a preset object distance detection algorithm, determine illumination of the image by using a preset illumination detection algorithm, determine exposure of the image by using a preset exposure detection algorithm, and recognize, by using a preset face detection algorithm and an animal recognition algorithm, whether the image includes a specific object such as a person, a cat, or a dog, a quantity of objects, an area ratio, and the like.

Then, the camera algorithm library may determine, based on the feature information of the image, a photographing scene in which the electronic device is currently located, and determine a photographing mode that matches the photographing scene. The camera algorithm library may set the matched photographing mode as a recommended mode. The camera algorithm library may send information about the recommended mode back to the camera application at the application layer.

The camera algorithm library may further include image processing algorithms corresponding to various photographing modes. After one or more photographing modes are selected, the camera algorithm library may invoke a corresponding image processing algorithm to process the image reported by the camera, and then upload a processed image back to the application layer for display.

3. The electronic device 100 updates content displayed on the screen, and recommends the photographing mode that matches the current photographing scene to the user.

In one aspect, the image reported by the camera is displayed in a specified region (for example, a preview window) of the screen of the camera application.

In another aspect, the camera application may manage each window in a user interface by using a window manager, and update content displayed in the window, for example, display/exit display of a mode recommendation control. In this way, the electronic device 100 may recommend, to the user in real time by using the foregoing mode recommendation control, the photographing mode that matches the current photographing scene.

The photographing mode switching method provided in the embodiments of this application is described below with reference to application scenarios.

In some application scenarios, a user may take a photo or record a video in a plurality of photographing modes in a camera application of an electronic device 100. Before taking a photo or recording a video, the user may switch between different photographing modes in the camera application to view effects of preview pictures in different photographing modes. The user may alternatively adjust a zoom ratio (zoom radio) in each photographing mode to view effects of preview pictures at different zoom ratios. The electronic device 100 may receive an input from the user, and set a zoom ratio to a first zoom ratio in a first photographing mode. When the electronic device 100 switches from the first photographing mode to a second photographing mode, the electronic device 100 may determine whether a zoom ratio range supported by the second photographing mode includes the first zoom ratio. If the zoom ratio range supported by the second photographing mode includes the first zoom ratio, the electronic device 100 may set an initial zoom ratio in the second photographing mode to the first zoom ratio. In this way, a field of view (field of view, FOV) of a preview picture may be prevented from jumping excessively in a photographing mode switching process, thereby improving a display effect of the preview picture in the photographing mode switching process.

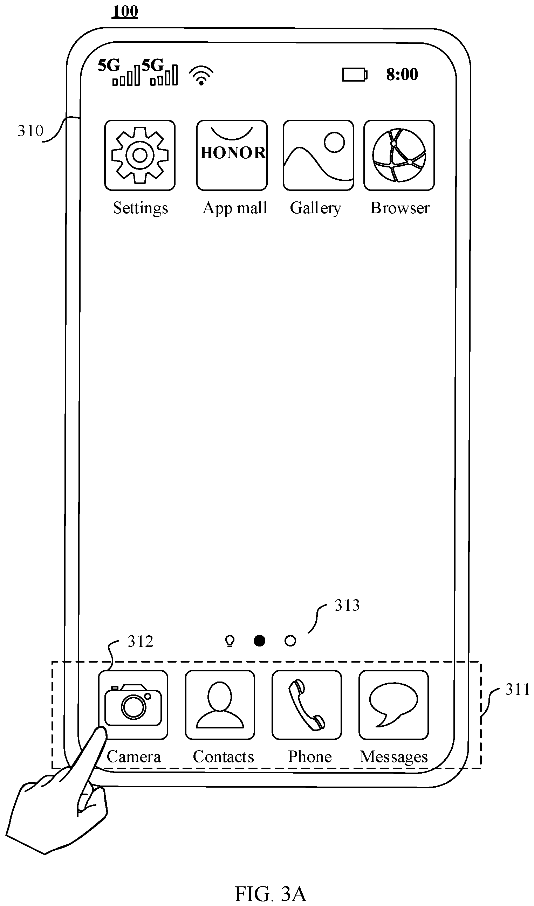

For example, as shown in FIG. 3A, the electronic device 100 may display a home screen 310. A page on which an application icon is placed is displayed on the home screen 310. The page includes a plurality of application icons (for example, a settings application icon, an App mall icon, a gallery application icon, and a browser application icon). A page indicator 313 may be further displayed and included below the plurality of application icons, to indicate a location relationship between the currently displayed page and another page. A tray region 311 is displayed below the page indicator 313. The tray region 311 includes a plurality of tray icons, for example, a camera application icon 312, a contacts application icon, a phone application icon, and a messages application icon. The tray region 311 remains displayed during page switching. In some embodiments, the page may alternatively include a plurality of application icons and the page indicator 313. The page indicator 313 may not be a part of the page, and may exist alone. The tray icon is also optional. This is not limited in this embodiment of this application.

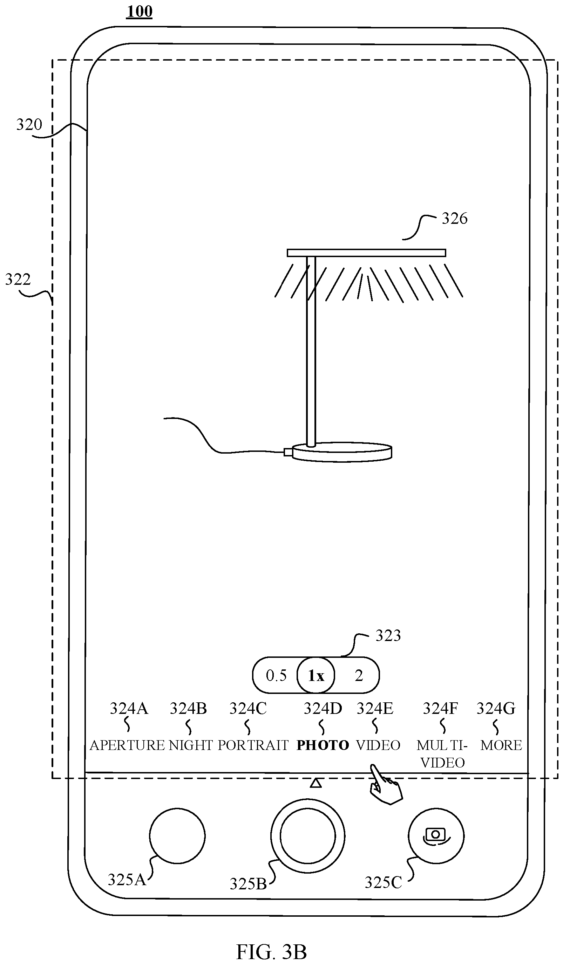

The electronic device 100 may receive an input (for example, a tap) performed by the user on the camera application icon 312. In response to the input operation, the electronic device 100 may display a photographing interface 320 shown in FIG. 3B.

As shown in FIG. 3B, the photographing interface 320 may include an echo control 325A, a photographing control 325B, a camera conversion control 325C, a preview box 322, a zoom ratio control 323, a control of one or more photographing modes (for example, a control 324A of an APERTURE photographing mode, a control 324B of a NIGHT photographing mode, a control 324C of a PORTRAIT photographing mode, a control 324D of a normal photographing mode, a control 324E of a normal video recording mode, a control 324F of a multi-lens video recording mode, and a more mode control 324G).

As shown in FIG. 3B, the control 324D of the normal photographing mode is selected, and the electronic device 100 is in the normal photographing mode. The preview box 322 displays a preview picture 326 captured by the electronic device 100 in the normal photographing mode by using a camera. The echo control 325A may be configured to trigger display of a captured image or a shot video. The photographing control 325B is configured to trigger storage of an image captured by the camera. The camera conversion control 325C may be configured to switch a camera for capturing an image by the electronic device 100 (for example, switch a front-facing camera to a rear-facing camera or switch a rear-facing camera to a front-facing camera). The zoom ratio control 323 may be configured to set a zoom magnification used by the electronic device 100 to take a photo or shoot a video. The zoom ratio control 323 may display a currently used zoom ratio (for example, 1x), a first commonly used zoom ratio (for example, 0.5x) less than the currently used zoom ratio, and a second commonly used zoom ratio (for example, 2x) greater than the currently used zoom ratio.

A control of a photographing mode may be configured to trigger enabling of an image processing procedure corresponding to the photographing mode. For example, the control 324A of the APERTURE photographing mode may be configured to trigger the camera to capture an image by using an aperture parameter. For example, the control 324B of the NIGHT photographing mode may be configured to trigger an increase in brightness and color richness and like in a captured image. The control 324C of the PORTRAIT photographing mode may be configured to trigger the electronic device 100 to beautify a portrait in a captured image. The control 324D of the normal photographing mode may be configured to trigger the electronic device 100 to capture an image by using a default parameter, and process, by using a default image processing procedure, an image captured by the camera. The control 324E of the normal video recording mode may be configured to trigger the electronic device 100 to record a video by using a single camera. The control 324F of the multi-lens video recording mode may be configured to trigger the electronic device 100 to simultaneously record a video by using a plurality of cameras. The more control 324G may be configured to trigger the electronic device 100 to display controls of more photographing modes.

The electronic device 100 may receive an input (for example, a tap) of selecting the control 324E of the normal video recording mode by the user. In response to the input, the electronic device 100 may switch from the normal photographing mode to the normal video recording mode.

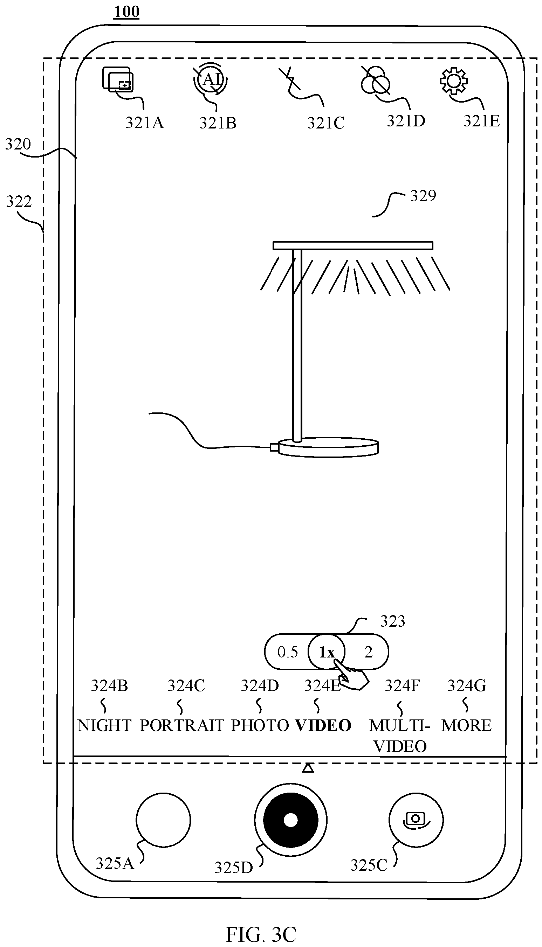

As shown in FIG. 3C, after the electronic device 100 switches to the normal video recording mode, the electronic device 100 may display, in the preview box 322, a preview picture 329 obtained in real time by the camera in the normal video recording mode, and replace the photographing control 325B with a recording start control 325D. After switching to the normal video recording mode, the electronic device 100 may display one or more function controls (for example, a control 321A of a SOLO CUT video recording mode, an AI scene recognition control 321B, a flash control 321C, a color mode control 321D, and a setting control 321E) in the photographing interface 320. The control 321A of the SOLO CUT video recording mode may be configured to trigger, when being enabled, the electronic device 100 to recognize a protagonist in a plurality of people in a preview picture. The AI scene recognition control 321B may be configured to trigger, when being enabled, the electronic device 100 to recognize a photographing scene in a preview picture, and the AI scene recognition control 321B is currently in a disabled state. The flash control 321C may be configured to trigger the electronic device 100 to enable or disable a flash. The color mode control 321D may be configured to trigger the electronic device 100 to use a color filter to process an image captured by the camera. The setting control 321E may be configured to set a photographing parameter (for example, an image size and an image storage format) of the electronic device 100.

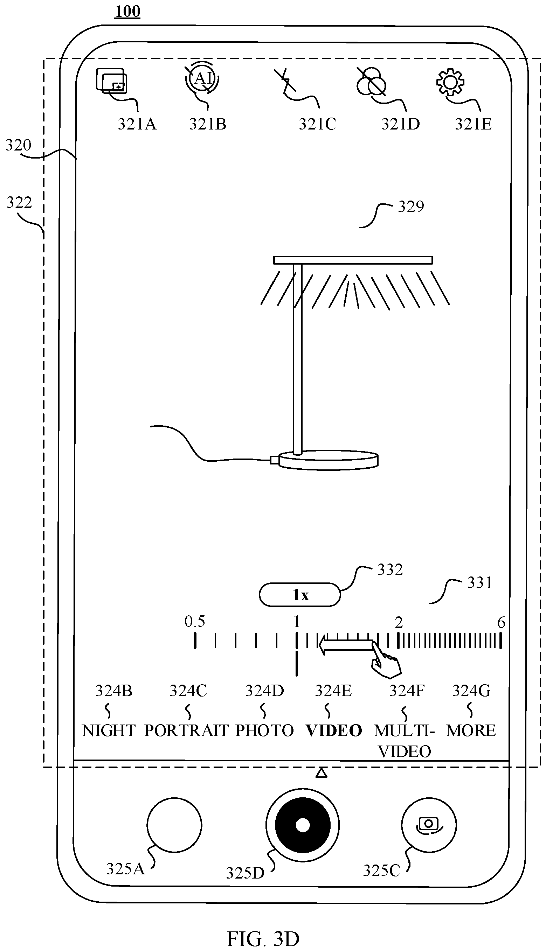

The electronic device 100 may receive an input (for example, a tap) performed by the user on the zoom ratio control 323. In response to the input, the electronic device 100 may display a zoom ratio setting control 331 and a current zoom ratio control 332 shown in FIG. 3D.

As shown in FIG. 3D, the electronic device 100 may replace the zoom ratio control 323 with the zoom ratio setting control 331 and the current zoom ratio control 332 for display. The zoom ratio setting control 331 may display a zoom ratio range (for example, 0.5x~6x) supported by the normal video recording mode. The electronic device 100 may determine, based on an input (for example, sliding) performed by the user on the zoom ratio setting control 331, a zoom ratio set by the user. The current zoom ratio control 332 may be configured to display a zoom ratio currently selected by the user from the zoom ratio setting control 331.

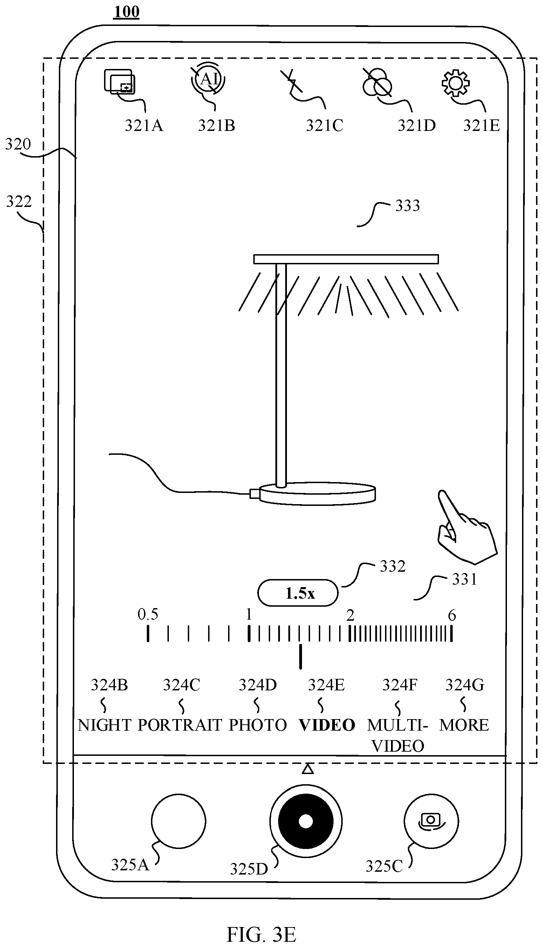

As shown in FIG. 3E, the electronic device 100 may receive an input (for example, sliding) performed by the user on the zoom ratio setting control 331, and respond to the input to adjust a zoom ratio in normal video recording mode (for example, adjust the zoom ratio from 1x to 1.5x), and obtain a real-time preview picture 333 based on a zoom ratio (for example, 1.5x) set by the user. The electronic device 100 may display the preview picture 333 in the preview box 322. Comparing the preview picture 333 with the preview picture 329, because the zoom ratio (for example, 1.5x) of the preview picture 333 is greater than a zoom ratio (for example, 1x) of the preview picture 329, a picture proportion of a photographed subject in the preview picture 333 is greater than a picture proportion of the same photographed subject in the preview picture 329.

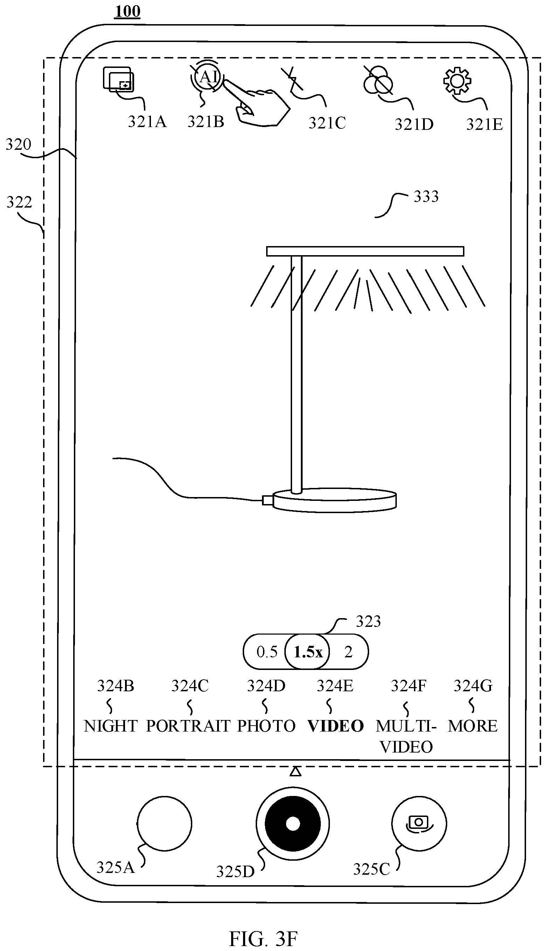

After the electronic device 100 sets the zoom ratio in the normal video recording mode based on the input performed by the user on the zoom ratio setting control 331, the electronic device 100 may receive an input (for example, a tap) performed by the user on a blank region (that is, a region without a touchable control) in the photographing interface 320, and respond to the input to replace the zoom ratio setting control 331 and the current zoom ratio control 332 with the zoom ratio control 323 for display, as shown in FIG. 3F.

As shown in FIG. 3F, after the electronic device 100 replaces the zoom ratio setting control 331 and the current zoom ratio control 332 with the zoom ratio control 323 for display, the zoom ratio control 323 may display a current zoom ratio (for example, 1.5x), a first commonly used zoom ratio (for example, 0.5x) less than the currently used zoom ratio, and a second commonly used zoom ratio (for example, 2x) greater than the currently used zoom ratio.

The electronic device 100 may receive an input (for example, a tap) performed by the user on the AI scene recognition control 321B. In response to the input, the electronic device 100 may enable the AI scene recognition function, recognize a photographing scene, and determine a recommended photographing mode based on the photographing scene.

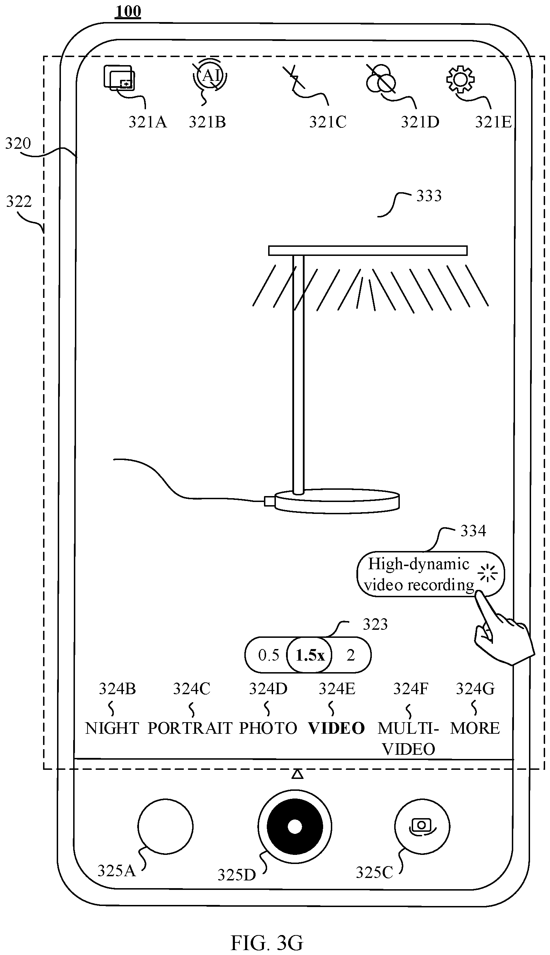

As shown in FIG. 3G, after determining that the recommended photographing mode is a high-dynamic video recording mode, the electronic device 100 may display a control 334 of the high-dynamic video recording mode. After the control 334 is enabled, if the electronic device 100 starts to record a video, the electronic device 100 may record the video by using a photographing parameter and an image processing procedure in the high-dynamic video recording mode.

The electronic device 100 may receive an input (for example, a tap) performed by the user on the control 334 of the high-dynamic video recording mode, and respond to the input to switch from the normal video recording mode to the high-dynamic video recording mode, and determine whether a zoom ratio last used in the normal video recording mode used before switching is within a zoom ratio range supported by the high-dynamic video recording mode. If the zoom ratio last used in the normal video recording mode is within the zoom ratio range supported by the high-dynamic video recording mode, the electronic device 100 may set an initial zoom ratio used after switching to the high-dynamic video recording mode to the zoom ratio last used in the normal video recording mode.

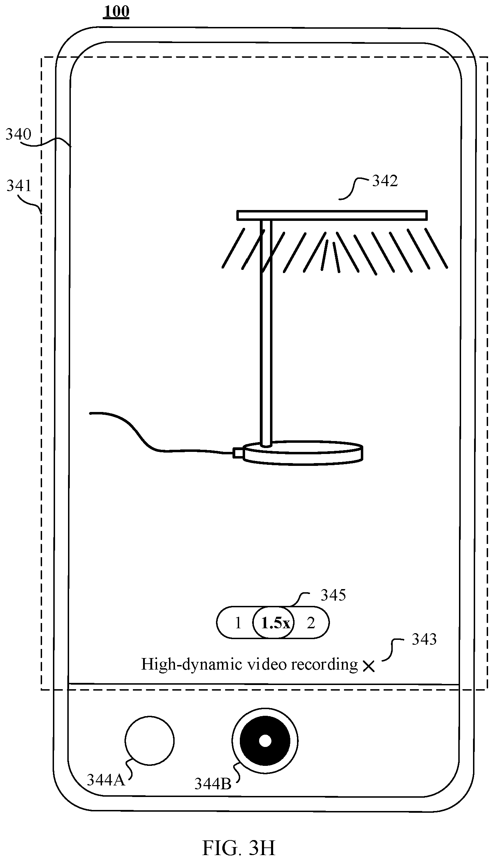

As shown in FIG. 3H, for example, the zoom ratio last used in the normal video recording mode is 1.5x, a zoom ratio range supported by the high-dynamic video recording mode is 1x~4x, and the zoom ratio last used in the normal video recording mode is within the zoom ratio range supported by the high-dynamic video recording mode. After switching to the high-dynamic video recording mode, the electronic device 100 may display a high-dynamic video recording interface 340. The high-dynamic video recording interface 340 may include a preview box 341, a disable control 343, an echo control 344A, a recording start control 344B, and a zoom ratio control 345. The zoom ratio control 345 may display a current zoom ratio of 1.5x. The electronic device 100 may capture an image in real time by using the photographing parameter in the high-dynamic video recording mode, and process, by using the image processing procedure in the high-dynamic video recording mode, the image captured in real time to obtain a real-time preview picture 342. A zoom ratio of the real-time preview picture 342 is 1.5x. The electronic device 100 may display the real-time preview picture 342 in the preview box 341. The recording start control 344B is configured to trigger the electronic device 100 to start video recording in the high-dynamic video recording mode. The disable control 343 may be configured to trigger the electronic device 100 to exit the high-dynamic video recording mode.

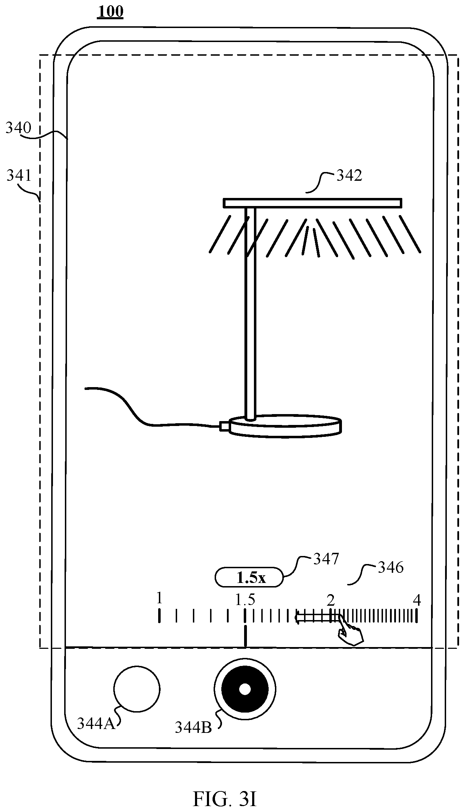

The electronic device 100 may receive an input (for example, a tap) performed by the user on the zoom ratio control 345. In response to the input, the electronic device 100 may display a zoom ratio setting control 346 and a current zoom ratio control 347 shown in FIG. 3I.

As shown in FIG. 3I, the electronic device 100 may replace the zoom ratio control 345 and the disable control 343 with the zoom ratio setting control 346 and the current zoom ratio control 347 for display. The zoom ratio setting control 346 may display the zoom ratio range (for example, 1x~4x) supported by the high-dynamic video recording mode. The electronic device 100 may determine, based on an input (for example, sliding) performed by the user on the zoom ratio setting control 346, a zoom ratio set by the user. The current zoom ratio control 347 may be configured to display a zoom ratio currently selected by the user from the zoom ratio setting control 346.

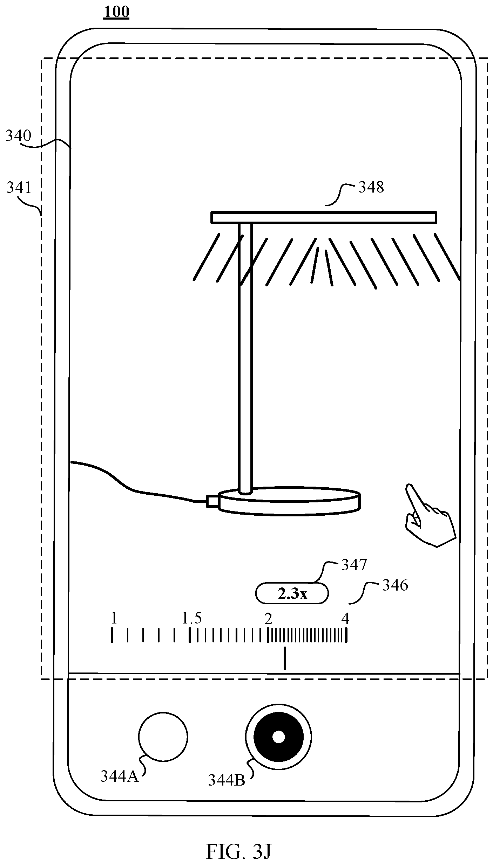

As shown in FIG. 3J, the electronic device 100 may receive an input (for example, sliding) performed by the user on the zoom ratio setting control 346, and respond to the input to adjust a zoom ratio (for example, adjust the zoom ratio from 1.5x to 2.3x) in the high-dynamic video recording mode, and obtain a real-time preview picture 348 based on the zoom ratio (for example, 1.5x) set by the user. The electronic device 100 may display the preview picture 348 in the preview box 341. Comparing the preview picture 333 with the preview picture 329, because the zoom ratio (for example, 2.3x) of the preview picture 348 is greater than a zoom ratio (for example, 1.5x) of the preview picture 342, a picture proportion of a photographed subject in the preview picture 348 is greater than a picture proportion of the same photographed subject in the preview picture 342.

After the electronic device 100 sets the zoom ratio in the high-dynamic video recording mode based on the input performed by the user on the zoom ratio setting control 346, the electronic device 100 may receive an input (for example, a tap) performed by the user on a blank region (that is, a region without a touchable control) in the photographing interface 350, and respond to the input to replace the zoom ratio setting control 346 and the current zoom ratio control 347 with the zoom ratio control 345 and the disable control 343 for display.

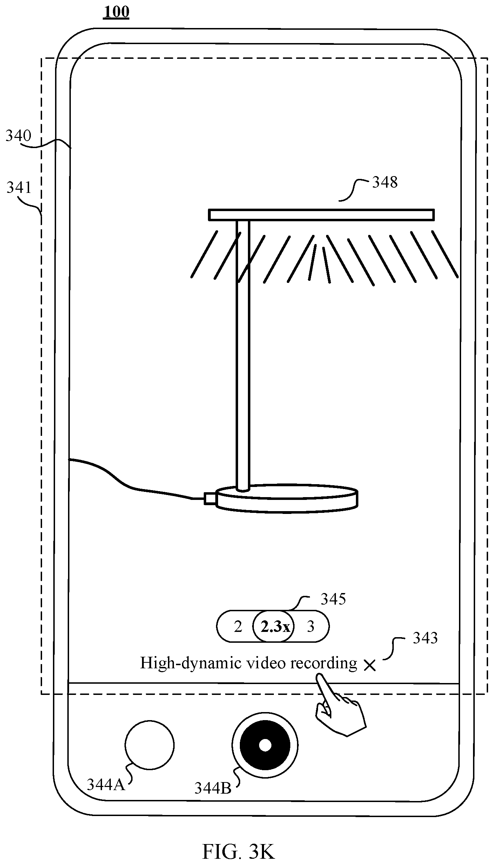

As shown in FIG. 3K, after the electronic device 100 replaces the zoom ratio setting control 346 and the current zoom ratio control 347 with the zoom ratio control 345 and the disable control 343 for display, the zoom ratio control 345 may display a current zoom ratio (for example, 2.3x), a first commonly used zoom ratio (for example, 2x) less than the currently used zoom ratio, and a second commonly used zoom ratio (for example, 3x) greater than the currently used zoom ratio.

The electronic device 100 may receive an input (for example, a tap) performed by the user on the disable control 343, and respond to the input to switch from the high-dynamic video recording mode to the normal video recording mode, and determine whether a zoom ratio last used in the high-dynamic video recording mode is within a zoom ratio range supported by the normal video recording mode used before switching. If the zoom ratio last used in the high-dynamic video recording mode is within the zoom ratio range supported by the normal video recording mode, the electronic device 100 may set an initial zoom ratio used after switching to the normal video recording mode to the zoom ratio last used in the high-dynamic video recording mode.

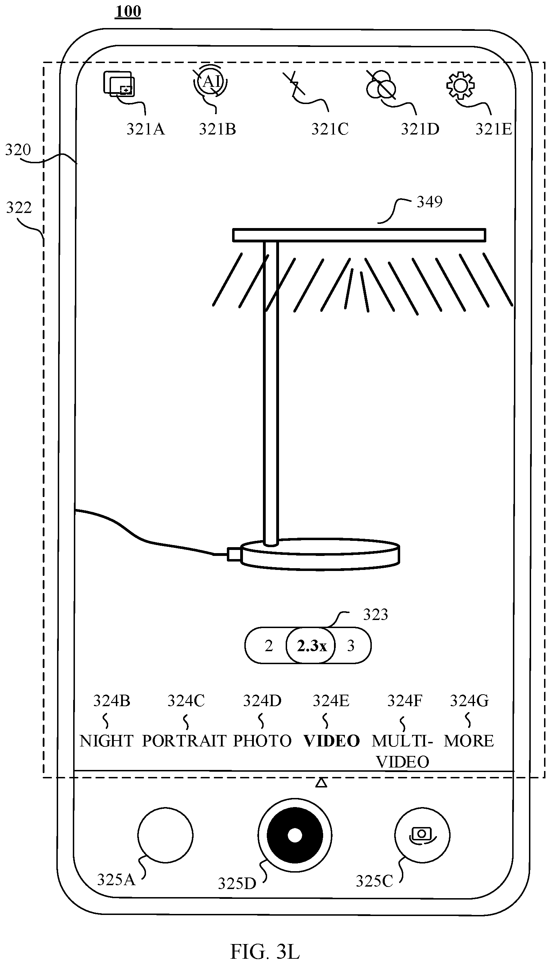

As shown in FIG. 3L, for example, the zoom ratio last used in the high-dynamic video recording mode is 2.3x, the zoom ratio range supported by the normal video recording mode is 0.5x~6x, and the zoom ratio last used in the high-dynamic video recording mode is within the zoom ratio range supported by the normal video recording mode. After switching to the normal video recording mode, the electronic device 100 may display the photographing interface 320, and display, on the zoom ratio control 323 in the photographing interface 320, a current zoom ratio that is the zoom ratio (for example, 2.3x) last used in the high-dynamic video recording mode. The electronic device 100 may capture an image in real time by using a photographing parameter in the normal video recording mode, and process, by using the image processing procedure in the high-dynamic video recording mode, the image captured in real time to obtain a real-time preview picture 349. A zoom ratio of the real-time preview picture 349 is 2.3x. The electronic device 100 may display the real-time preview picture 349 in the preview box 322.

In some embodiments, when a zoom ratio in a first photographing mode is a first zoom ratio, when an electronic device 100 switches from the first photographing mode to a second photographing mode, the electronic device 100 may determine whether a zoom ratio range supported by the second photographing mode includes the first zoom ratio. If the zoom ratio range supported by the second photographing mode does not include the first zoom ratio, the electronic device 100 may determine, as a target zoom ratio, a zoom ratio closest to the first zoom ratio in the zoom ratio range supported by the second photographing mode, and set the target zoom ratio as an initial zoom ratio used when entering the second photographing mode.

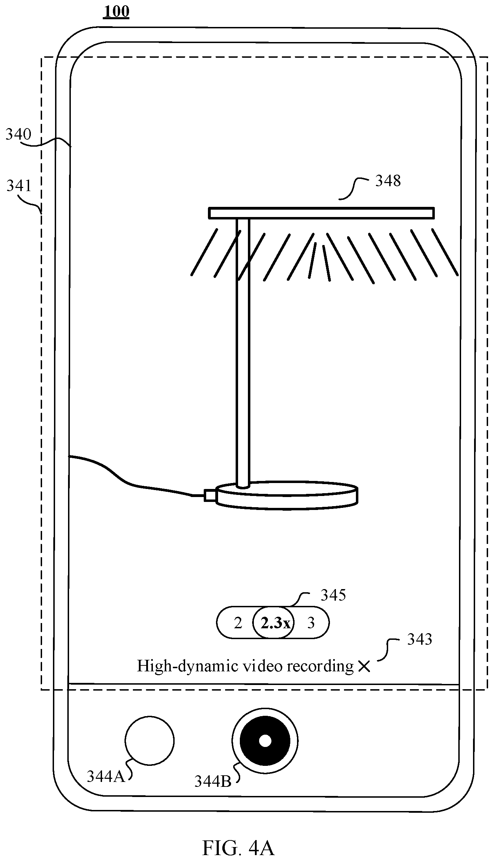

For example, as shown in FIG. 4A, the electronic device 100 is in a high-dynamic video recording mode, and displays a high-dynamic video recording interface 340. A current zoom ratio displayed on a zoom ratio control 345 in the high-dynamic video recording interface 340 is 2.3x, and the electronic device 100 displays a preview picture 348 with a zoom ratio of 2.3x in the preview box 341 in the high-dynamic video recording interface 340. For a specific text description of the high-dynamic video recording interface 340, refer to the embodiment shown in FIG. 3K. Details are not described herein again.

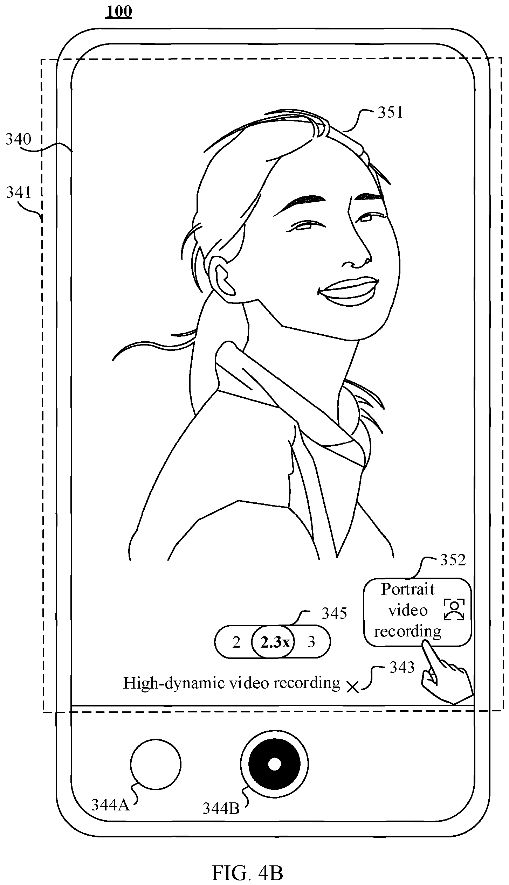

As shown in FIG. 4B, the electronic device 100 may convert a photographed subject to photograph a portrait. The electronic device 100 may recognize that a preview picture 351 includes a portrait. Therefore, the electronic device 100 may display a control 352 of a PORTRAIT video recording mode. After the control 352 is enabled, if the electronic device 100 starts to record a video, the electronic device 100 may record the video by using a photographing parameter and an image processing procedure in the PORTRAIT video recording mode. For example, a background region other than a portrait in a video picture is blurred to highlight a portrait feature.

The electronic device 100 may receive an input (for example, a tap) performed by a user on the control 352 of the PORTRAIT video recording mode, and respond to the input to switch from the high-dynamic video recording mode to the PORTRAIT video recording mode, and determine whether a zoom ratio last used in the high-dynamic video recording mode used before switching is within a zoom ratio range supported by the PORTRAIT video recording mode. If the zoom ratio last used in the high-dynamic video recording mode is not within the zoom ratio range supported by the PORTRAIT video recording mode, the electronic device 100 may determine, as a target zoom ratio, a zoom ratio that is in the zoom ratio range supported by the PORTRAIT video recording mode and that is closest to the zoom ratio last used in the high-dynamic video recording mode, and set the target zoom ratio as an initial zoom ratio used when entering the PORTRAIT video recording mode.

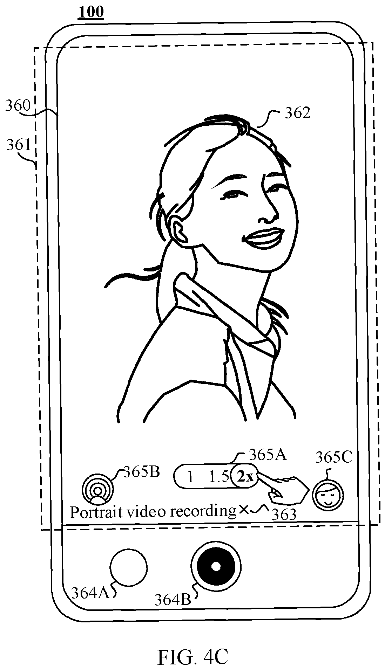

As shown in FIG. 4C, for example, the zoom ratio last used in the high-dynamic video recording mode is 2.3x, the zoom ratio range supported by the PORTRAIT video recording mode is 1x~2x, and the zoom ratio last used in the high-dynamic video recording mode is not within the zoom ratio range supported by the PORTRAIT video recording mode. The electronic device 100 may determine that the zoom ratio that is in the zoom ratio range supported by the PORTRAIT video recording mode and that is closest to the zoom ratio last used in the high-dynamic video recording mode is 2x. Therefore, the target zoom ratio is 2x. After switching to the PORTRAIT video recording mode, the electronic device 100 may display a portrait video recording interface 360. The portrait video recording interface 360 may include a preview box 361, a disable control 363, an echo control 364A, a recording start control 364B, and a zoom ratio control 365A. The zoom ratio control 365A may display a current zoom ratio of 2x. The electronic device 100 may capture an image in real time by using the photographing parameter in the high-dynamic video recording mode, and process, by using the image processing procedure in the high-dynamic video recording mode, the image captured in real time to obtain a real-time preview picture 362. A zoom ratio of the real-time preview picture 362 is 2x. The electronic device 100 may display the real-time preview picture 362 in the preview box 361. The echo control 364A may be configured to trigger display of a captured image or a shot video. The recording start control 364B is configured to trigger the electronic device 100 to start video recording in the high-dynamic video recording mode. The disable control 363 may be configured to trigger the electronic device 100 to exit the high-dynamic video recording mode.

Optionally, after switching to a normal video recording mode, the electronic device 100 may display one or more function controls related to portrait video recording, for example, a background blurring control 365B, a beauty control 365C, and the like. The background blurring control 365B may be configured to set a background blurring degree in a preview picture and a captured picture. The beauty control 365C may be configured to set a beautification degree of a face color in a preview picture and a captured picture.

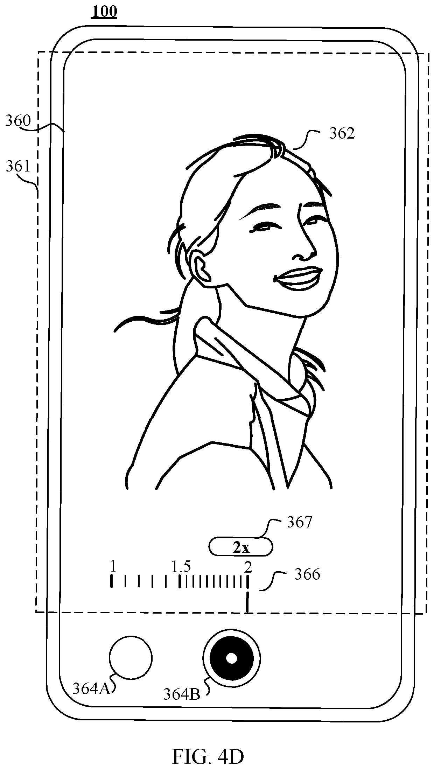

The electronic device 100 may receive an input (for example, a tap) performed by the user on the zoom ratio control 365A. In response to the input, the electronic device 100 may display a zoom ratio setting control 366 and a current zoom ratio control 367 shown in FIG. 4D.

As shown in FIG. 4D, the electronic device 100 may replace the zoom ratio control 365A, the disable control 363, the background blurring control 365B, the beauty control 365C, and the like with the zoom ratio setting control 366 and the current zoom ratio control 367 for display. The zoom ratio setting control 366 may display the zoom ratio range (for example, 1x~2x) supported by the PORTRAIT video recording mode. The electronic device 100 may determine, based on an input (for example, sliding) performed by the user on the zoom ratio setting control 366, a zoom ratio set by the user. The current zoom ratio control 367 may be configured to display a zoom ratio currently selected by the user from the zoom ratio setting control 366.

A photographing mode switching method provided in an embodiment of this application is described below with reference to software modules.

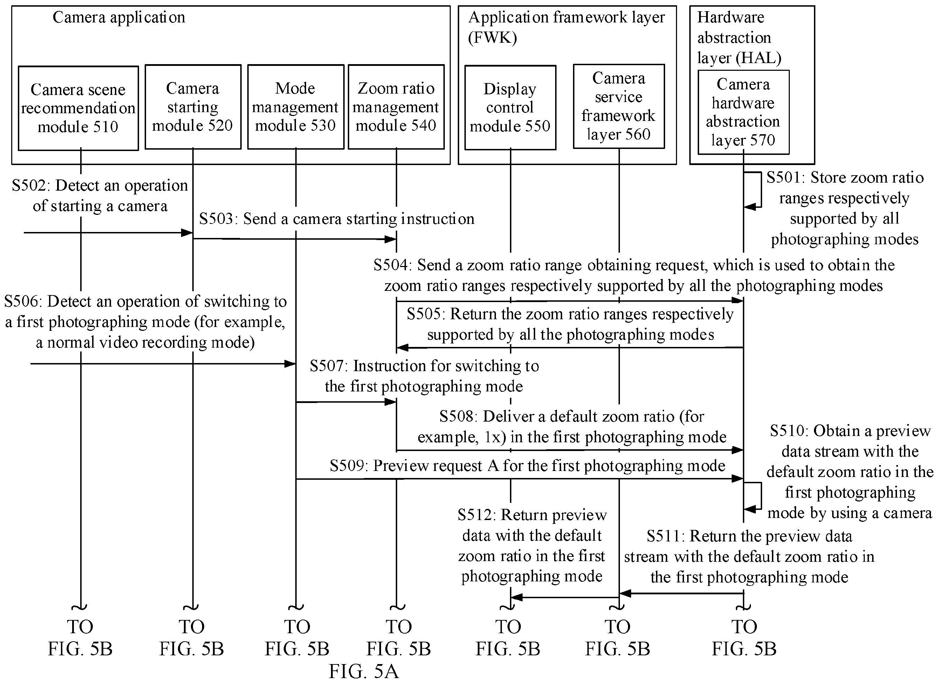

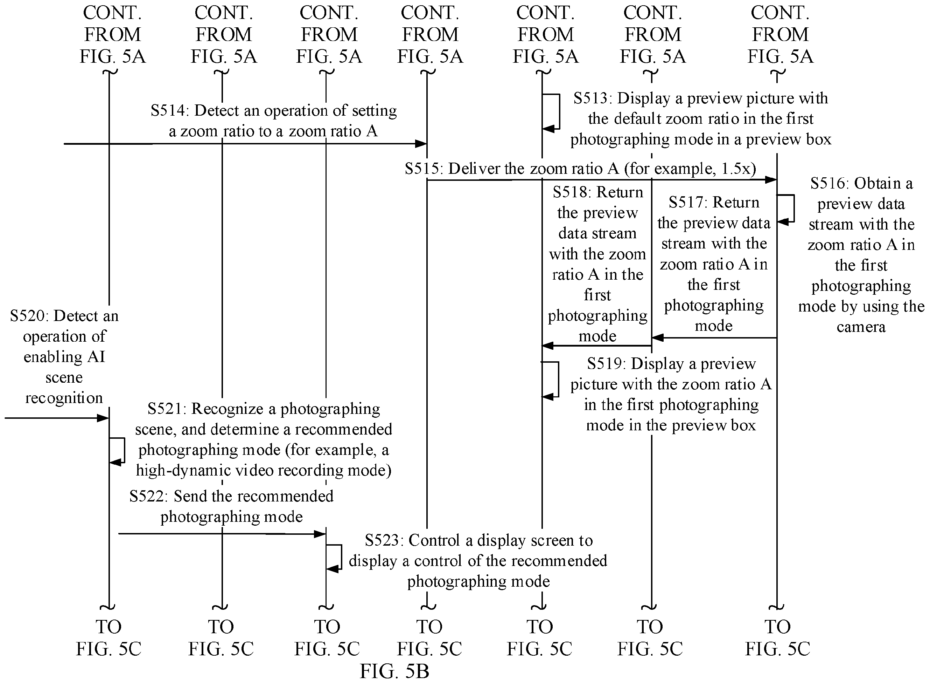

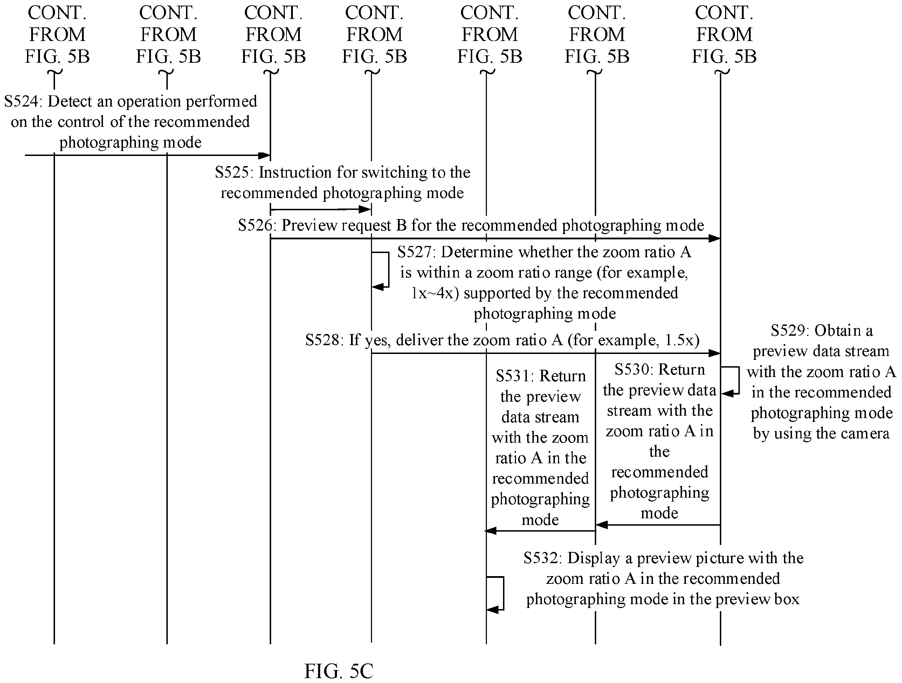

FIG. 5A to FIG. 5C is a schematic diagram of interaction between software modules in a photographing mode switching method according to an embodiment of this application.

As shown in FIG. 5A, a software framework of an electronic device 100 may include a camera application (camera application), an application framework (framework, FWK) layer, and a hardware abstraction layer (hardware abstraction layer, HAL). The camera application may include a camera scene recommendation module 510, a camera starting module 520, a mode management module 530, and a zoom ratio (zoom radio) management module 540. The application framework layer may include a display control module 550 and a camera service framework (camera framework, Camera FWK) layer 560. The hardware abstraction layer may include a camera hardware abstraction layer (camera hardware abstraction layer, Camera HAL) 570.

A process of interaction between the software modules of the electronic device 100 may include the following steps:
S501: The camera hardware abstraction layer 570 stores zoom ratio ranges respectively supported by all photographing modes on the electronic device 100.

For example, all photographing modes of the camera application on the electronic device 100 may include more of a normal photographing mode, a PORTRAIT photographing mode, an APERTURE photographing mode, a high-dynamic photographing mode, a MACRO photographing mode, a normal video recording mode, a MACRO video recording mode, a PORTRAIT video recording mode, a high-dynamic video recording mode, a SOLO CUT video recording mode, a multi-lens video recording mode, and the like. The foregoing examples are merely used to explain this application, and shall not constitute any limitation. In this embodiment of this application, there may be more or less photographing modes.

For example, a zoom ratio range supported by the normal photographing mode may be 0.5x~20x, a zoom ratio range supported by the PORTRAIT photographing mode may be 1x~2x, a zoom ratio range supported by the APERTURE photographing mode may be 1x~3x, a zoom ratio range supported by the high-dynamic photographing mode may be 1x~4x, a zoom ratio range supported by the MACRO photographing mode may be 0.5x~2x, a zoom ratio range supported by the normal photographing mode may be 0.5x~6x, a zoom ratio range supported by the MACRO video recording mode may be 0.5x~2x, a zoom ratio range supported by the PORTRAIT video recording mode may be 1x~2x, a zoom ratio range supported by the high-dynamic video recording mode may be 1x~4x, a zoom ratio range supported by the SOLO CUT video recording mode may be 0.5x~2x, and a zoom ratio range supported by the multi-lens video recording mode may be 1x~6x. The foregoing examples are merely used to explain this application, and shall not constitute any limitation.

S502: The camera starting module 520 detects an operation of starting a camera.

For example, the operation of starting the camera may be an operation performed on the camera application icon 312 in the embodiment shown in FIG. 3A.

S503: The camera starting module 520 may send a camera starting instruction to the zoom ratio management module 540 in response to the operation of starting the camera.

S504: The zoom ratio management module 540 sends a zoom ratio range obtaining request to the camera hardware abstraction layer 570. The zoom ratio range obtaining request is used to obtain the zoom ratio ranges respectively corresponding to all the photographing modes.

S505: The camera hardware abstraction layer 570 returns, in response to the zoom ratio range obtaining request, the zoom ratio ranges respectively supported by all the photographing modes to the zoom ratio management module 540.

After the camera hardware abstraction layer 570 receives the zoom ratio range obtaining request, the camera hardware abstraction layer 570 may return the zoom ratio ranges respectively supported by all the photographing modes to the zoom ratio management module 540.

S506: The mode management module 530 detects an operation of switching to a first photographing mode.

The first photographing mode may be the normal video recording mode. The operation of switching to the first photographing mode may be the input performed on the control 324E of the normal video recording mode, as shown in FIG. 3B. For specific content, refer to the embodiment shown in FIG. 3B. Details are not described herein again.

In a possible implementation, the first photographing mode may alternatively be any one of other video recording modes recommended based on a photographing scene, for example, a MACRO video recording mode, a PORTRAIT video recording mode, a high-dynamic video recording mode, a SOLO CUT video recording mode, and a multi-lens video recording mode.

S507: After detecting the operation of switching to the first photographing mode, the mode management module 530 may send an instruction for the first photographing mode to the zoom ratio management module 540.

S508: The zoom ratio management module 540 delivers a default zoom ratio in the first photographing mode to the camera hardware abstraction layer 570 in response to the instruction for the first photographing mode.

For example, the default zoom ratio may be 1x. In specific implementation, the default zoom ratio may alternatively be another value, which is not limited herein.

S509: After detecting that the electronic device is in the first photographing mode, the mode management module 530 may send a preview request A for the first photographing mode to the camera hardware abstraction layer 570. The preview request A is used to request the camera hardware abstraction layer 570 to obtain a preview data stream in the first photographing mode.

S510: After obtaining the preview request A and the default zoom ratio, the camera hardware abstraction layer 570 may obtain a preview data stream with the default zoom ratio in the first photographing mode by using a camera.

After receiving the preview request A and the default zoom ratio, the camera hardware abstraction layer 570 may determine whether a zoom ratio A is greater than a maximum optical zoom ratio value that is of the electronic device 100 and that supports optical zooming.

If the default zoom ratio is less than or equal to the maximum optical zoom ratio (for example, 3.5x) that is of the electronic device 100 and that supports optical zooming, the camera hardware abstraction layer 570 may control the camera to perform optical zooming to capture an image stream with the default zoom ratio by using a photographing parameter corresponding to the first photographing mode. After obtaining the image stream with the default zoom ratio, the camera hardware abstraction layer 570 may process an image with the default zoom ratio by using an image processing procedure corresponding to the first photographing mode, to obtain the preview data stream with the default zoom ratio in the first photographing mode.

If the default zoom ratio is greater than the maximum optical zoom ratio (for example, 3.5x) that is of the electronic device 100 and that supports optical zooming, the camera hardware abstraction layer 570 may control the camera to perform optical zooming to capture an image stream with the maximum optical zoom ratio in real time by using the photographing parameter corresponding to the first photographing. After obtaining the image stream with the maximum optical zoom ratio, the camera hardware abstraction layer 570 may crop and enlarge the image stream with the maximum optical zoom ratio by using a digital zooming processing procedure, to obtain an image stream with the default zoom ratio. The camera hardware abstraction layer 570 may process, by using the image processing procedure corresponding to the first photographing mode, an image in the image stream with the default zoom ratio to obtain the preview data stream with the default zoom ratio in the first photographing mode.

S511: After obtaining the preview data stream with the default zoom ratio in the first photographing mode, the camera hardware abstraction layer 570 returns the preview data stream with the default zoom ratio in the first photographing mode to the camera service framework layer 560.

S512: The camera service framework layer 560 may return the preview data stream with the default zoom ratio in the first photographing mode to the display control module 550.

S513: The display control module 550 may display a preview picture with the default zoom ratio in the first photographing mode in a preview box.

S514: The zoom ratio management module 540 detects an operation of setting a zoom ratio to a zoom ratio A.

For example, the first photographing mode may be the normal video recording mode, the operation of setting the zoom ratio to the zoom ratio A may be the input performed on the zoom ratio setting control 331 in the embodiment described in FIG. 3D, and the zoom ratio A may be 1.5x. For another example, the first photographing mode may be the high-dynamic video recording mode, and the operation of setting the zoom ratio to the zoom ratio A may be the input performed on the zoom ratio control 346 in the embodiment described in FIG. 3I. The foregoing examples are merely used to explain this application, and shall not constitute any limitation.

S515: The zoom ratio management module 540 delivers the zoom ratio A to the camera hardware abstraction layer 570 in response to the operation of setting the zoom ratio to the zoom ratio A.

S516: After receiving the zoom ratio A, the camera hardware abstraction layer 570 may obtain a preview data stream with the zoom ratio A in the first photographing mode by using the camera.

After the camera hardware abstraction layer 570 receives the zoom ratio A, the camera hardware abstraction layer 570 may determine whether the zoom ratio A is greater than the maximum optical zoom ratio value that is of the electronic device 100 and that supports optical zooming.

If the zoom ratio Ais less than or equal to the maximum optical zoom ratio (for example, 3.5x) that is of the electronic device 100 and that supports optical zooming, the camera hardware abstraction layer 570 may control the camera to perform optical zooming to capture an image stream with the zoom ratio A by using the photographing parameter corresponding to the first photographing mode. After obtaining the image stream with the zoom ratio A, the camera hardware abstraction layer 570 may process an image with the zoom ratio A by using the image processing procedure corresponding to the first photographing mode, to obtain the preview data stream with the zoom ratio A in the first photographing mode.

If the zoom ratio A is greater than the maximum optical zoom ratio (for example, 3.5x) that is of the electronic device 100 and that supports optical zooming, the camera hardware abstraction layer 570 may control the camera to perform optical zooming to capture an image stream with the maximum optical zoom ratio in real time by using the photographing parameter corresponding to the first photographing. After obtaining the image stream with the maximum optical zoom ratio, the camera hardware abstraction layer 570 may crop and enlarge the image stream with the maximum optical zoom ratio by using the digital zooming processing procedure, to obtain an image stream with the zoom ratio A. The camera hardware abstraction layer 570 may process, by using the image processing procedure corresponding to the first photographing mode, an image in the image stream with the zoom ratio A to obtain the preview data stream with the zoom ratio A in the first photographing mode.

S517: After obtaining the preview data stream with the zoom ratio A in the first photographing mode, the camera hardware abstraction layer 570 returns the preview data stream with the zoom ratio A in the first photographing mode to the camera service framework layer 560.

S518: The camera service framework layer 560 may send the preview data stream with the zoom ratio A in the first photographing mode to the display control module 550.

S519: The display control module 550 may display a preview picture with the zoom ratio A in the first photographing mode in the preview box.

S520: The camera scene recommendation module 510 may detect an operation of enabling AI scene recognition.

For example, the operation of detecting that AI scene recognition is enabled may be the input performed on the AI scene recognition control 321B in the disabled state in the embodiment shown in FIG. 3F. For specific content, refer to the embodiment shown in FIG. 3F. Details are not described herein again.

S521: The camera scene recommendation module 510 recognizes a photographing scene in response to the operation of enabling AI scene recognition, and determines a recommended photographing mode.

The recommended photographing mode may include any one or a combination of a MACRO video recording mode, a NIGHT video recording mode, a PORTRAIT video recording mode, a high-dynamic video recording mode, a SOLO CUT video recording mode, a multi-lens video recording mode, and the like.

For example, a matching condition of the recommended photographing mode is shown in the following Table 1:

**Table 1**

| Recommended photographing mode | Matching condition | Applicable scene |
|---|---|---|
| MACRO video recording mode | Object distance<D1; and illumination is less than L 1 | Close-range photographing |
| NIGHT video recording | Illumination>L2 | Photograph a night scene |
| mode | | |
| PORTRAIT video recording mode | Maximum face area ratio in a preview picture>P1; and illumination<L3 | Photograph a portrait |
| High-dynamic video recording mode | Exposure>M1 | High-exposure photographing |
| SOLO CUT video recording mode | Quantity of faces in a preview picture≥2; | Photograph a plurality of people |
| | P2<a maximum face area ratio in the preview picture<P1; and illumination<L4 | |
| Multi-lens video recording mode | It is recognized that a preview picture includes a preset object such as a cat or a dog | Photograph a specific object |

It may be learned from the foregoing Table 1 that, when the camera scene recommendation module 510 recognizes that a distance (an object distance) between a photographed object and the electronic device 100 is less than D1 and illumination is less than L1, the camera scene recommendation module 510 may determine that the recommended photographing mode is the MACRO video recording mode. When the camera scene recommendation module 510 recognizes that illumination is greater than L2, the camera scene recommendation module 510 may determine that the recommended photographing mode is the NIGHT video recording mode. When the camera scene recommendation module 510 recognizes that a maximum face area ratio in a preview picture>P1 and illumination<L3, the camera scene recommendation module 510 may determine that the recommended photographing mode is the PORTRAIT video recording mode. When the camera scene recommendation module 510 recognizes that a quantity of faces in a preview picture≥2, P2<a maximum face area ratio in the preview picture<P1, and illumination<L4, the camera scene recommendation module 510 may determine that the recommended photographing mode is the SOLO CUT video recording mode. When the camera scene recommendation module 501 recognizes that a preview picture includes a preset object such as a cat or a dog and a zoom ratio is within 1x~6x, the camera scene recommendation module 501 may determine that the recommended photographing mode is the multi-lens video recording mode.

The object distance threshold D1, the illumination thresholds L1, L2, L3, and L4, the proportion thresholds P1 and P2 are preset, and specific values thereof are not limited in this embodiment of this application. It may be understood that the specific values may be set by a developer based on experience. For example, D1=12 cm, L1=450F, L2=440F, L3=450F, L4=350F, P1=15%, and P2=7%. The foregoing examples are merely used to explain this application, and shall not constitute any limitation.

In a possible implementation, when detecting that the normal video recording mode is switched to, the mode management module 530 may notify the camera scene recommendation module 510 to enable AI scene recognition to recognize a photographing scene of the electronic device 100, and determine a recommended photographing mode.

S522: The camera scene recommendation module 510 sends the recommended photographing mode to the mode management module 530.

The recommended photographing mode is different from the foregoing first photographing mode. For example, the first photographing mode may be the normal video recording mode, and the recommended photographing mode may be the high-dynamic video recording mode.

S523: The mode management module 530 may control display of a control of the recommended photographing mode on a display screen.

S524: The mode management module 530 may detect an operation performed on the control of the recommended photographing mode.

For example, the recommended photographing mode may be the high-dynamic video recording mode, and the control of the recommended photographing mode may be the control 334 shown in FIG. 3G, and the operation performed on the control of the recommended photographing mode may be the input performed on the control 334 in the embodiment shown in FIG. 3G. For specific content, refer to the embodiment shown in FIG. 3G. Details are not described herein again.

S525: The mode management module 530 sends, in response to the operation performed on the control of the recommended photographing mode, an instruction for switching to the recommended photographing mode to the zoom ratio management module 540.

S526: The mode management module 530 may send a preview request B for the recommended photographing to the camera hardware abstraction layer 570 in response to the operation performed on the control of the recommended photographing mode. The preview request B is used to request the camera hardware abstraction layer 570 to obtain a preview data stream in the recommended photographing mode.

S527: The zoom ratio management module 540 may determine, in response to the instruction for the recommended photographing mode, whether the zoom ratio A is within a zoom ratio range of the recommended photographing mode.

S528: If the zoom ratio A is within the zoom ratio range of the recommended photographing mode, the zoom ratio management module 540 may deliver the zoom ratio A to the camera hardware abstraction layer 570.

For example, the first photographing mode may be the normal video recording mode, the recommended photographing mode is the high-dynamic video recording mode, the zoom ratio Ais 1.5x, a zoom ratio range supported by the high-dynamic video recording mode may be 1x~4x, and the zoom ratio A last used in the normal video recording mode is within the zoom ratio range supported by the high-dynamic video recording mode. Therefore, the zoom ratio management module 540 may deliver a zoom ratio of 1.5x to the camera hardware abstraction layer 570.

S529: After receiving the preview request B for the recommended photographing mode and the zoom ratio A, the camera hardware abstraction layer 570 may obtain a preview data stream with the zoom ratio A in the recommended photographing mode by using the camera.

After the camera hardware abstraction layer 570 receives the preview request B for the recommended photographing mode and the zoom ratio A, the camera hardware abstraction layer 570 may determine whether the zoom ratio Ais greater than the maximum optical zoom ratio value that is of the electronic device 100 and that supports optical zooming.

If the zoom ratio Ais less than or equal to the maximum optical zoom ratio (for example, 3.5x) that is of the electronic device 100 and that supports optical zooming, the camera hardware abstraction layer 570 may control the camera to perform optical zooming to capture an image stream with the zoom ratio A by using a photographing parameter corresponding to the recommended photographing mode. After obtaining the image stream with the zoom ratio A, the camera hardware abstraction layer 570 may process an image with the zoom ratio A by using an image processing procedure corresponding to the recommended photographing mode, to obtain the preview data stream with the zoom ratio A in the recommended photographing mode.

If the zoom ratio A is greater than the maximum optical zoom ratio (for example, 3.5x) that is of the electronic device 100 and that supports optical zooming, the camera hardware abstraction layer 570 may control the camera to perform optical zooming to capture an image stream with the maximum optical zoom ratio in real time by using the photographing parameter corresponding to the recommended photographing. After obtaining the image stream with the maximum optical zoom ratio, the camera hardware abstraction layer 570 may crop and enlarge the image stream with the maximum optical zoom ratio by using the digital zooming processing procedure, to obtain an image stream with the zoom ratio A. The camera hardware abstraction layer 570 may process, by using the image processing procedure corresponding to the recommended photographing mode, an image in the image stream with the zoom ratio A to obtain the preview data stream with the zoom ratio A in the recommended photographing mode.

S530: After obtaining the preview data stream with the zoom ratio A in the recommended photographing mode, the camera hardware abstraction layer 570 may return the preview data stream with the zoom ratio A in the recommended photographing mode to the camera service framework layer 560.

S531: The camera service framework layer 560 may send the preview data stream with the zoom ratio A in the recommended photographing mode to the display control module 550.

S532: The display control module 550 may display a preview picture with the zoom ratio A in the recommended photographing mode in the preview box.

According to this embodiment of this application, when the electronic device 100 switches from the first photographing mode to a second photographing mode, the electronic device 100 may determine whether a zoom ratio range supported by the second photographing mode includes a first zoom ratio. If the zoom ratio range supported by the second photographing mode includes the first zoom ratio, the electronic device 100 may set an initial zoom ratio in the second photographing mode to the first zoom ratio. In this way, a field of view (field of view, FOV) of a preview picture may be prevented from jumping excessively in a photographing mode switching process, thereby improving a display effect of the preview picture in the photographing mode switching process.

In a possible implementation, if the zoom ratio A is not within the zoom ratio range of the recommended photographing mode, the zoom ratio management module 540 may determine, as a target zoom ratio, a zoom ratio (for example, a first value or a second value) that is in the zoom ratio range supported by the recommended photographing mode (for example, the zoom ratio range supported by the recommended photographing mode is between the first value and the second value) and that is closest to the zoom ratio A, and delivers the target zoom ratio to the camera hardware abstraction layer 570. After receiving the preview request B and the target zoom ratio, the camera hardware abstraction layer 570 may obtain a preview data stream with a zoom ratio B in the recommended photographing mode, and transmit the preview data stream to the camera service framework layer 560. The camera service framework layer 560 may send the preview data stream with the zoom ratio B in the recommended photographing mode to the display control module 550. The display control module 550 may display a preview picture with the target zoom ratio in the recommended photographing mode in the preview box.

For example, a value of the zoom ratio A last used in the high-dynamic video recording mode is 2.3x, the zoom ratio range supported by the PORTRAIT video recording mode is 1x~2x, and the zoom ratio A last used in the high-dynamic video recording mode is not within the zoom ratio range supported by the PORTRAIT video recording mode. Therefore, the zoom ratio management module 540 may deliver a zoom ratio B with a value of 2x to the camera hardware abstraction layer 570. The camera hardware abstraction layer 570 may obtain a preview data stream with the zoom ratio value of 2x in the PORTRAIT photographing mode, and transmit the preview data stream to the camera service framework layer 560. The camera service framework layer 560 may send the preview data stream with the zoom ratio value of 2x in the PORTRAIT video recording mode to the display control module 550. The display control module 550 may display a preview picture with the zoom ratio value of 2x in the PORTRAIT video recording mode in the preview box.

In this way, in a photographing mode switching process, when a zoom ratio last used in a previous photographing mode is not within a zoom ratio range supported by a subsequent photographing mode, a jump amplitude of a field of view (field of view, FOV) of a preview picture can be reduced as much as possible, thereby improving a display effect of the preview picture in the photographing mode switching process.

In a possible implementation, if the zoom ratio A is not within the zoom ratio range of the recommended photographing mode, the zoom ratio management module 540 may deliver a default zoom ratio (for example, 1x) of the recommended photographing mode to the camera hardware abstraction layer 570. After receiving the preview request B and the default zoom ratio, the camera hardware abstraction layer 570 may obtain a preview data stream with the default zoom ratio in the recommended photographing mode, and transmit the preview data stream to the camera service framework layer 560. The camera service framework layer 560 may send the preview data stream with the default zoom ratio in the recommended photographing mode to the display control module 550. The display control module 550 may display, in the preview box, a preview picture with the default zoom ratio in the recommended photographing mode.

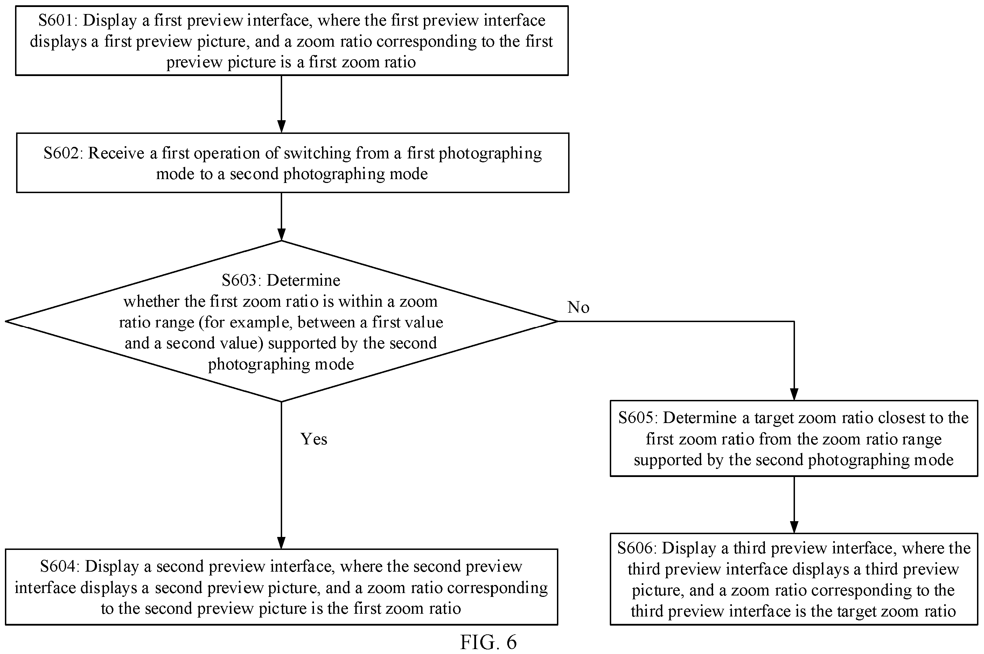

FIG. 6 is a schematic flowchart of a photographing mode switching method according to an embodiment of this application.

As shown in FIG. 6, the method includes the following steps:
S601: An electronic device 100 displays a first preview interface, where the first preview interface displays a first preview picture, and a zoom ratio corresponding to the first preview picture is a first zoom ratio.

The first preview interface includes a first preview box, the first preview box displays the first preview picture, and the first preview picture is captured in the first photographing mode.

The first preview interface may further display a first zoom ratio control, and a zoom ratio selected on the first zoom ratio control is the first zoom ratio.

The selected zoom ratio may be a zoom ratio value displayed in a specified style on the zoom ratio control, and the selected zoom ratio may be used to indicate a zoom ratio corresponding to a preview picture currently displayed on a display screen. For example, the selected zoom ratio is a zoom ratio value highlighted on the zoom ratio control. For another example, the selected zoom ratio may be a zoom ratio value enclosed by a closed graphic such as a circle or a rectangle on the zoom ratio control. For another example, the selected zoom ratio may be a zoom ratio value marked in a special color (for example, yellow) on the zoom ratio control. For example, as shown in the embodiment shown in FIG. 3F, the zoom ratio selected on the zoom ratio control 323 is 1.5x. The word "1.5x" is enclosed by a circular graphic.

The first zoom ratio control may be configured to trigger a user to set a zoom ratio in the first photographing mode.

The first photographing mode may be a normal photographing mode. The first photographing mode may alternatively be a normal video recording mode. The first photographing mode may alternatively be any one of other video recording modes recommended based on a photographing scene, for example, a MACRO video recording mode, a PORTRAIT video recording mode, a high-dynamic video recording mode, a SOLO CUT video recording mode, a multi-lens video recording mode, and the like.

For example, the first photographing mode may be the normal video recording mode, the first preview interface may be the photographing interface 320 shown in the embodiment shown in FIG. 3G, the first preview box may be the preview box 322 shown in the embodiment shown in FIG. 3G, and the first zoom ratio control may be the zoom ratio control 323 shown in the embodiment shown in FIG. 3G. For specific content, refer to the embodiment shown in FIG. 3G. Details are not described herein again.

For another example, the first photographing mode may be the high-dynamic video recording mode, the first preview interface may be the high-dynamic video recording interface 340 shown in the embodiment shown in FIG. 3K or FIG. 4B, the first preview box may be the preview box 341 shown in the embodiment shown in FIG. 3K or FIG. 4B, and the first zoom ratio control may be the zoom ratio control 345 shown in the embodiment shown in FIG. 3K or FIG. 4B. For specific content, refer to the embodiment shown in FIG. 3K or FIG. 4B. Details are not described herein again.

If the first zoom ratio is less than or equal to a maximum optical zoom ratio (for example, 3.5x) that is of the electronic device and that supports optical zooming, the electronic device 100 may control a camera to perform optical zooming to capture an image stream with the first zoom ratio; and process, by using an image processing procedure corresponding to the first photographing mode, the image stream with the first zoom ratio to obtain a preview picture with the first zoom ratio in the first photographing mode.

If the first zoom ratio is greater than the maximum optical zoom ratio (for example, 3.5x) that is of the electronic device and that supports optical zooming, the camera is controlled to perform optical zooming to capture an image stream with the maximum optical zoom ratio; digital zooming is performed on the image stream with the maximum optical zoom ratio to obtain an image stream with the first zoom ratio; and the image processing procedure corresponding to the first photographing mode is used to perform the image stream with the first zoom ratio to obtain a preview picture with the first zoom ratio in the first photographing mode.

S602: The electronic device 100 receives a first operation of switching from the first photographing mode to a second photographing mode.

The first photographing mode is different from the second photographing mode. The second photographing mode may be any one of the following: a normal video recording mode, a MACRO video recording mode, a NIGHT video recording mode, a PORTRAIT video recording mode, a high-dynamic video recording mode, a SOLO CUT video recording mode, and a multi-lens video recording mode.

In a possible implementation, the electronic device 100 may recognize a photographing scene, and determine the second photographing mode. The electronic device 100 displays, in the first preview interface, a first control corresponding to the second photographing mode. The first operation may be an operation performed on the first control.

For example, the first photographing mode may be the normal video recording mode, the second photographing mode may be the high-dynamic video recording mode, the first control may be the control 334 of the high-dynamic video recording mode in the embodiment in FIG. 3G, and the first operation may be an operation performed on the control 334 of the high-dynamic video recording mode. For specific content, refer to the embodiment shown in FIG. 3G. Details are not described herein again.

For another example, the first photographing mode may be the high-dynamic video recording mode, the second photographing mode may be the PORTRAIT video recording mode, the first control may be the control 352 of the PORTRAIT video recording mode in the embodiment shown in FIG. 4B, and the first operation may be an operation performed on the control 352 of the PORTRAIT video recording mode. For specific content, refer to the embodiment shown in FIG. 4B. Details are not described herein again.

In an example, the first photographing mode may be the high-dynamic video recording mode, the second photographing mode may be the normal video recording mode, and the first operation may be an operation performed on the disable control 343 in the high-dynamic video recording interface 340 shown in FIG. 3K. For specific content, refer to the embodiment shown in FIG. 3K. Details are not described herein again.

S603: The electronic device 100 determines, in response to the first operation, whether the first zoom ratio is within a zoom ratio range supported by the second photographing mode, where the zoom ratio range supported by the second photographing mode may be from a first value to a second value.

The electronic device 100 may store zoom ratio ranges respectively supported by all photographing modes of the electronic device 100. For example, all photographing modes of a camera application on the electronic device 100 may include more of a normal photographing mode, a PORTRAIT photographing mode, an APERTURE photographing mode, a high-dynamic photographing mode, a MACRO photographing mode, a normal video recording mode, a MACRO video recording mode, a PORTRAIT video recording mode, a high-dynamic video recording mode, a SOLO CUT video recording mode, a multi-lens video recording mode, and the like. The foregoing examples are merely used to explain this application, and shall not constitute any limitation. In this embodiment of this application, there may be more or less photographing modes.

For example, a zoom ratio range supported by the normal photographing mode may be 0.5x~20x, a zoom ratio range supported by the PORTRAIT photographing mode may be 1x~2x, a zoom ratio range supported by the APERTURE photographing mode may be 1x~3x, a zoom ratio range supported by the high-dynamic photographing mode may be 1x~4x, a zoom ratio range supported by the MACRO photographing mode may be 0.5x~2x, a zoom ratio range supported by the normal photographing mode may be 0.5x~6x, a zoom ratio range supported by the MACRO video recording mode may be 0.5x~2x, a zoom ratio range supported by the PORTRAIT video recording mode may be 1x~2x, a zoom ratio range supported by the high-dynamic video recording mode may be 1x~4x, a zoom ratio range supported by the SOLO CUT video recording mode may be 0.5x~2x, and a zoom ratio range supported by the multi-lens video recording mode may be 1x~6x. The foregoing example zoom ratio ranges respectively supported by the plurality of photographing modes are merely used to explain this application, and shall not constitute any limitation.

Specifically, for a related process of obtaining the zoom ratio ranges respectively supported by all the photographing modes of the electronic device 100, refer to step S501 to step S504 in the embodiment shown in FIG. 5A. Details are not described herein again.

S604: If the first zoom ratio is within the zoom ratio range supported by the second photographing mode, the electronic device 100 displays a second preview interface, where the second preview interface displays a second preview picture, and a zoom ratio corresponding to the second preview picture is the first zoom ratio.

The second preview interface may include a second preview box, and the electronic device 100 may display the second preview picture in the second photographing mode in the second preview box.

The second preview interface may further display a second zoom ratio control, and a zoom ratio selected on the second zoom ratio control is the first zoom ratio. The second zoom ratio control may be configured to trigger the user to set a zoom ratio in the second photographing mode. For the zoom ratio selected on the second zoom ratio control, refer to the foregoing explanation of the first zoom ratio. Details are not described herein again.

For example, the first photographing mode is the normal video recording mode, the first zoom ratio is 1.5x, the second photographing mode is the high-dynamic video recording mode, and a zoom ratio range corresponding to the high-dynamic video recording mode is 1x~4x. The first zoom ratio is within the zoom ratio range corresponding to the high-dynamic video recording mode. Therefore, after switching to the high-dynamic video recording mode, the electronic device 100 may display the second preview interface, and display, in the second preview box, a preview picture with a zoom ratio of 1.5x in the high-dynamic video recording mode. The second preview interface may be the high-dynamic video recording interface 340 in the embodiment shown in FIG. 3H, and the second preview box may be the preview box 341 in the embodiment shown in FIG. 3H. For specific content, refer to the embodiments shown in FIG. 3G to FIG. 3I. Details are not described herein again.

For another example, the first photographing mode is the high-dynamic video recording mode, the first zoom ratio is 2.3x, the second photographing mode is the normal mode, and a zoom ratio range corresponding to the normal video recording mode is 1x~6x. The first zoom ratio is within the zoom ratio range corresponding to the normal video recording mode. Therefore, after switching to the high-dynamic video recording mode, the electronic device 100 may display the second preview interface, and display a preview picture with a zoom ratio of 1.5x in the high-dynamic video recording mode in the second preview box in the second preview box interface. The second preview interface may be the photographing interface 320 in the embodiment shown in FIG. 3L, and the second preview box may be the preview box 322 in the embodiment shown in FIG. 3L. For specific content, refer to the embodiments shown in FIG. 3K to FIG. 3L. Details are not described herein again.

If the first zoom ratio is less than or equal to the maximum optical zoom ratio that is of the electronic device 100 and that supports optical zooming, the electronic device 100 controls the camera to perform optical zooming to capture an image stream with the first zoom ratio. The electronic device 100 processes, by using the image processing procedure corresponding to the second photographing mode, the image stream with the first zoom ratio to obtain a preview picture with the first zoom ratio in the second photographing mode.

If the first zoom ratio is greater than the maximum optical zoom ratio that is of the electronic device and that supports optical zooming, the electronic device 100 controls the camera to perform optical zooming to capture an image stream with the maximum optical zoom ratio. The electronic device 100 performs digital zooming on the image stream with the maximum optical zoom ratio to obtain an image stream with the first zoom ratio. The electronic device 100 processes, by using the image processing procedure corresponding to the second photographing mode, the image stream with the first zoom ratio to obtain a preview picture with the first zoom ratio in the second photographing mode.

S605: If the first zoom ratio is not within the zoom ratio range supported by the second photographing mode, the electronic device 100 determines a target zoom ratio closest to the first zoom ratio from the zoom ratio range supported by the second photographing mode.

The zoom ratio range supported by the second photographing mode is between the first value and the second value, and the target zoom ratio is the first value or the second value. When the first zoom ratio is greater than the second value, the target zoom ratio is the second value; and when the first zoom ratio is less than the first value, the target zoom ratio is the first value.

S606: The electronic device 100 displays a third preview interface, where the third preview interface displays a third preview picture, and a zoom ratio corresponding to the third preview picture is the target zoom ratio.

The third preview interface may include a third preview box, and the electronic device 100 may display the third preview picture in the second photographing mode in the third preview box.

The third preview interface may further display a third zoom ratio control, and the third zoom ratio control displays a current zoom ratio. The third zoom ratio control may be configured to trigger the user to set the zoom ratio in the second photographing mode. If the first zoom ratio is within the zoom ratio range supported by the second photographing mode, the current zoom ratio displayed on the third zoom ratio control is the target zoom ratio.

For example, the first photographing mode is the high-dynamic video recording mode, the first zoom ratio is 2.3x, the second photographing mode is the PORTRAIT video recording mode, and a zoom ratio range corresponding to the PORTRAIT video recording mode is 1x~2x. The first zoom ratio is not within the zoom ratio range corresponding to the PORTRAIT video recording mode. Therefore, the electronic device 100 may determine that a target zoom ratio that is within the zoom ratio range corresponding to the PORTRAIT video recording mode and that is closest to the first zoom ratio is 2x. After switching to the PORTRAIT video recording mode, the electronic device 100 may display the third preview interface, and display a preview picture with a zoom ratio of 2x in the high-dynamic video recording mode in the third preview box in the third preview interface. The third preview interface may be the portrait video recording interface 360 in the embodiment shown in FIG. 4C, and the third preview box may be the preview box 361 in the embodiment shown in FIG. 4C. For specific content, refer to the embodiments shown in FIG. 4A to FIG. 4D. Details are not described herein again.

In this way, in a photographing mode switching process, when a zoom ratio last used in a previous photographing mode is not within a zoom ratio range supported by a subsequent photographing mode, a jump amplitude of a field of view (field of view, FOV) of a preview picture can be reduced as much as possible, thereby improving a display effect of the preview picture in the photographing mode switching process.

If the target zoom ratio is less than or equal to the maximum optical zoom ratio that is of the electronic device 100 and that supports optical zooming, the electronic device 100 controls the camera to perform optical zooming to capture an image stream with the target zoom ratio. The electronic device 100 processes, by using the image processing procedure corresponding to the second photographing mode, the image stream with the target zoom ratio to obtain a preview picture with the target zoom ratio in the second photographing mode.

If the target zoom ratio is greater than the maximum optical zoom ratio that is of the electronic device and that supports optical zooming, the electronic device 100 controls the camera to perform optical zooming to capture an image stream with the maximum optical zoom ratio. The electronic device 100 performs digital zooming on the image stream with the maximum optical zoom ratio to obtain an image stream with the target zoom ratio. The electronic device 100 processes, by using the image processing procedure corresponding to the second photographing mode, the image stream with the target zoom ratio to obtain a preview picture with the target zoom ratio in the second photographing mode.

In a possible implementation, when the first zoom ratio is not within the zoom range supported by the second photographing mode, a fourth preview interface is displayed in response to the first operation, where the fourth preview interface displays a fourth preview picture, and a zoom ratio corresponding to the fourth preview picture is a default zoom ratio.

According to this embodiment of this application, when the electronic device 100 switches from the first photographing mode to the second photographing mode, the electronic device 100 may determine whether the zoom ratio range supported by the second photographing mode includes the first zoom ratio. If the zoom ratio range supported by the second photographing mode includes the first zoom ratio, the electronic device 100 may set an initial zoom ratio in the second photographing mode to the first zoom ratio. In this way, a field of view (field of view, FOV) of a preview picture may be prevented from jumping excessively in a photographing mode switching process, thereby improving a display effect of the preview picture in the photographing mode switching process.

An embodiment of this application further provides a computer-readable storage medium. The computer-readable storage medium stores a computer program, and when the computer program is executed by a processor, the steps in the foregoing method embodiments may be implemented.

An embodiment of this application further provides a computer program product. When the computer program product runs on an electronic device, the electronic device is enabled to implement the steps in the foregoing method embodiments.

An embodiment of this application further provides a chip system. The chip system includes a processor. The processor is coupled to a memory, and the processor executes a computer program stored in the memory, to implement the steps in any method embodiment of this application. The chip system may be a single chip or a chip module including a plurality of chips.

A term "user interface (user interface, UI)" in the specification, claims, and accompanying drawings of this application is a medium interface for interaction and information exchange between an application or an operating system and a user, and the medium interface implements conversion between an internal form of information and a form acceptable to the user. A user interface of an application is source code written in a specific computer language such as java or an extensible markup language (extensible markup language, XML). The source code of the interface is parsed and rendered on a terminal device, and is finally presented as user-recognizable content, for example, a control such as a picture, a text, or a button. The control (control) is also referred to as a widget (widget), and is a basic element of the user interface. Typical controls include a toolbar (toolbar), a menu bar (menu bar), a text box (text box), a button (button), a scrollbar (scrollbar), a picture, and a text. An attribute and content of the control in the interface are defined by using a label or a node. For example, the control included in the interface is defined in the XML by using a node such as <Textview>, <ImgView>, or <VideoView>. One node corresponds to one control or attribute in the interface. After being parsed and rendered, the node is presented as user-visible content. In addition, interfaces of many applications, such as a hybrid application (hybrid application), usually further include a web page. The web page, also referred to as a page, may be understood as a special control embedded in an application interface. The web page is source code written in a specific computer language, for example, a hyper text markup language (hyper text markup language, HTML), a cascading style sheet (cascading style sheets, CSS), or a javascript (JavaScript, JS). The source code of the web page may be loaded and displayed as user-recognizable content by a browser or a web page display component with a function similar to that of the browser. Specific content included in the web page is also defined by using a label or a node in the source code of the web page. For example, an element and an attribute of the web page are defined in the HTML by using <p>, <img>, <video>, and <canvas>.

The user interface is usually in a representation form of a graphical user interface (graphic user interface, GUI), and the graphical user interface is a user interface that is related to a computer operation and that is displayed in a graphical manner. The graphical user interface may be an interface element such as an icon, a window, or a control that is displayed on a display screen of an electronic device. The control may include visible interface elements such as an icon, a button, a menu, a tab, a text box, a dialog box, a status bar, a navigation bar, and a Widget.

The singular expression forms "one", "a", "the", "the foregoing", and "this" used in the specification and the appended claims of this application are also intended to include plural expression forms, unless otherwise specified in the context clearly. It should be further understood that the term "and/or" used in this application indicates and includes any or all possible combinations of one or more listed items. As used in the foregoing embodiments, based on the context, the term "when ..." may be interpreted as a meaning of "if ...", "after ...", "in response to determining ...", or "in response to detecting ...". Similarly, based on the context, the phrase "when determining ..." or "if detecting (a stated condition or event)" may be interpreted as a meaning of "if determining ...", "in response to determining ...", "when detecting (a stated condition or event)", or "in response to detecting ... (a stated condition or event)".

All or some of the foregoing embodiments may be implemented by using software, hardware, firmware, or any combination thereof. When the software is used for implementation, some or all of the embodiments may be implemented in a form of a computer program product. The computer program product includes one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired manner (for example, a coaxial cable, an optical fiber, or a digital subscriber line) or a wireless manner (for example, infrared, wireless, or microwave). The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

Persons of ordinary skill in the art may understand that all or some of the procedures of the methods in the foregoing embodiments are implemented. The procedures may be completed by a computer program instructing related hardware. The program may be stored in a computer-readable storage medium. When the program is executed, the procedures in the foregoing method embodiments may be included. The foregoing storage medium includes any medium that can store program code, for example, a ROM, a random access memory RAM, a magnetic disk, or an optical disc.

The foregoing embodiments are merely intended to describe the technical solutions in this application, but not intended to limit this application. Although this application is described in detail with reference to the foregoing embodiments, persons of ordinary skill in the art should understand that they may still make modifications to the technical solutions described in the foregoing embodiments or make equivalent replacements to some technical features thereof. However, these modifications or replacements do not make the essence of the corresponding technical solutions depart from the scope of the technical solutions in the embodiments of this application.

## Claims

1. A photographing mode switching method, applied to an electronic device having a camera, wherein the method comprises:
displaying a first preview interface, wherein the first preview interface displays a first preview picture, and a zoom ratio corresponding to the first preview picture is a first zoom ratio;
receiving a first operation of switching from the first photographing mode to a second photographing mode, wherein the first photographing mode is different from the second photographing mode; and
when the first zoom ratio is within a zoom ratio range supported by the second photographing mode, displaying a second preview interface in response to the first operation, wherein the second preview interface displays a second preview picture, and a zoom ratio corresponding to the second preview picture is the first zoom ratio.

2. The method according to claim 1, wherein the first preview interface further displays a first zoom ratio control, and a zoom ratio selected on the first zoom ratio control is the first zoom ratio; and
the second preview interface further displays a second zoom ratio control, and a zoom ratio selected on the second zoom ratio control is the first zoom ratio.

3. The method according to claim 1 or 2, wherein that the first zoom ratio is within a zoom ratio range supported by the second photographing mode comprises:
the first zoom ratio is greater than or equal to a first value, and the first zoom ratio is less than or equal to a second value, wherein the first value is less than the second value.

4. The method according to claim 3, wherein the method further comprises:
when the first zoom ratio is not within the zoom ratio range supported by the second photographing mode, displaying a third preview interface in response to the first operation, wherein the third preview interface displays a third preview picture, and a zoom ratio corresponding to the third preview picture is the first value or the second value.

5. The method according to claim 4, wherein when the first zoom ratio is greater than the second value, the zoom ratio corresponding to the third preview picture is the second value; and
when the first zoom ratio is less than the first value, the zoom ratio corresponding to the third preview picture is the first value.

6. The method according to claim 1, wherein the method further comprises:
when the first zoom ratio is not within the zoom range supported by the second photographing mode, displaying a fourth preview interface in response to the first operation, wherein the fourth preview interface displays a fourth preview picture, and a zoom ratio corresponding to the fourth preview picture is a default zoom ratio.

7. The method according to any one of claims 1-4, wherein before the receiving a first operation of switching from the first photographing mode to a second photographing mode, the method further comprises:
recognizing a photographing scene and determining the second photographing mode based on the photographing scene; and
displaying, in the first preview interface, a first control corresponding to the second photographing mode, wherein the first operation is an operation corresponding to the first control.

8. The method according to claim 7, wherein the first preview interface further comprises an AI scene recognition control; and before the recognizing a photographing scene and determining the second photographing mode based on the photographing scene, the method further comprises:
receiving a second operation performed on the AI scene recognition control; and
the recognizing a photographing scene and determining the second photographing mode specifically comprises:
recognizing the photographing scene in response to the second operation, and determining the second photographing mode based on the photographing scene.

9. The method according to any one of claims 1-8, wherein the receiving a first operation of switching from the first photographing mode to a second photographing mode specifically comprises:
detecting, by using a mode management module in a camera application on the electronic device, the first operation of switching from the first photographing mode to the second photographing mode; and
the method further comprises:
sending, by the mode management module in response to the first operation, an instruction for switching to the second photographing mode to a zoom ratio management module in the camera application, and sending a preview request for the first photographing mode to a camera hardware abstraction layer;
after receiving the instruction for switching to the second photographing mode, determining, by the zoom ratio management module, whether the first zoom ratio is within the zoom ratio range supported by the second photographing mode;
when the first zoom ratio is within the zoom ratio range supported by the second photographing mode, sending, by the zoom ratio management module, the first zoom ratio to the camera hardware abstraction layer on the electronic device; and
after receiving the instruction for switching to the second photographing mode and the first zoom ratio, obtaining, by the camera hardware abstraction layer, preview data captured by the camera of the electronic device in the second photographing mode at the first zoom ratio.

10. The method according to claim 9, wherein the method comprises:
sending, by the camera hardware abstraction layer to a display control module at an application framework layer on the electronic device, the preview data captured by the camera of the electronic device in the second photographing mode; and
displaying, by the display control module, the second preview picture in the second preview interface based on the preview data captured by the camera of the electronic device in the second photographing mode at the first zoom ratio.

11. The method according to claim 9 or 10, wherein the zoom ratio range supported by the second photographing mode is between a first value and a second value, and the method further comprises:
when the first zoom ratio is not within the zoom ratio range supported by the second photographing mode, sending, by the zoom ratio management module, the first value or the second value to the camera hardware abstraction layer on the electronic device;
after receiving the instruction for switching to the second photographing mode and the first value or the second value, obtaining, by the camera hardware abstraction layer, preview data captured by the camera of the electronic device in the second photographing mode at a zoom ratio with the first value or the second value;
sending, by the camera hardware abstraction layer to the display control module, the preview data captured by the camera of the electronic device in the second photographing mode at the zoom ratio with the first value or the second value; and
displaying, by the display control module, the third preview picture in the third preview interface based on the preview data captured by the camera of the electronic device in the second photographing mode at the zoom ratio with the first value or the second value.

12. The method according to any one of claims 9-11, wherein the camera hardware abstraction layer stores zoom ratio ranges of a plurality of photographing modes, and the plurality of photographing modes comprise the first photographing mode and the second photographing mode; and before the detecting, by using a mode management module in a camera application, the first operation of switching from the first photographing mode to the second photographing mode, the method further comprises:
detecting, by a camera starting module in the camera application, an operation of starting the camera application;
sending, by the camera starting module, a camera starting instruction to the zoom ratio management module in response to the operation of starting the camera application;
sending, by the zoom ratio module, a zoom ratio range obtaining request to the camera hardware abstraction layer; and
returning, by the camera hardware abstraction layer, the zoom ratio ranges respectively supported by the plurality of photographing modes to the zoom ratio management module.

13. The method according to any one of claims 1-12, wherein when displaying the first preview interface, the method further comprises:
if the first zoom ratio is less than or equal to a maximum optical zoom ratio that is of the electronic device and that supports optical zooming, controlling the camera to perform optical zooming to capture an image stream with the first zoom ratio; and
processing, by using an image processing procedure corresponding to the first photographing mode, the image stream with the first zoom ratio to obtain the first preview picture.

14. The method according to any one of claims 1-13, wherein when displaying the first preview interface, the method further comprises:
if the first zoom ratio is greater than the maximum optical zoom ratio that is of the electronic device and that supports optical zooming, controlling the camera to perform optical zooming to capture an image stream with the maximum optical zoom ratio;
performing digital zooming on the image stream with the maximum optical zoom ratio to obtain an image stream with the first zoom ratio; and
processing, by using the image processing procedure corresponding to the first photographing mode, the image stream with the first zoom ratio to obtain the first preview picture.

15. The method according to any one of claims 1-14, wherein when displaying the second preview interface, the method further comprises:
if the first zoom ratio is less than or equal to the maximum optical zoom ratio that is of the electronic device and that supports optical zooming, controlling the camera to perform optical zooming to capture an image stream with the first zoom ratio; and
processing, by using an image processing procedure corresponding to the second photographing mode, the image stream with the first zoom ratio to obtain the second preview picture.

16. The method according to any one of claims 1-15, wherein when displaying the second preview interface, the method further comprises:
if the first zoom ratio is greater than the maximum optical zoom ratio that is of the electronic device and that supports optical zooming, controlling the camera to perform optical zooming to capture an image stream with the maximum optical zoom ratio;
performing digital zooming on the image stream with the maximum optical zoom ratio to obtain an image stream with the first zoom ratio; and
processing, by using the image processing procedure corresponding to the second photographing mode, the image stream with the first zoom ratio to obtain the second preview picture.

17. The method according to any one of claims 1-16, wherein the first photographing mode is any one of the following: a normal video recording mode, a MACRO video recording mode, a NIGHT video recording mode, a PORTRAIT video recording mode, a high-dynamic video recording mode, a SOLO CUT video recording mode, and a multi-lens video recording mode; and
the second photographing mode is any one of the following: a normal video recording mode, a MACRO video recording mode, a NIGHT video recording mode, a PORTRAIT video recording mode, a high-dynamic video recording mode, a SOLO CUT video recording mode, and a multi-lens video recording mode.

18. An electronic device, comprising a camera, one or more processors, and one or more memories, wherein the camera and the one or more memories are coupled to the one or more processors, the one or more memories are configured to store computer program code, the computer program code comprises computer instructions, and when the one or more processors execute the computer instructions, the method according to any one of claims 1-17 is enabled to be performed.

19. An electronic device, comprising one or more functional modules, wherein the one or more functional modules are configured to perform the method according to any one of claims 1-17.

20. A chip system, wherein the chip system is applied to an electronic device, the chip system comprises one or more processors, and the processor is configured to invoke computer instructions to enable the method according to any one of claims 1-17 to be performed.

21. A computer-readable storage medium, comprising instructions, wherein when the instructions are run on an electronic device, the method according to any one of claims 1-17 is enabled to be performed.
